# EUROPEAN PATENT APPLICATION

(11) **EP 4 721 543 A1**
(43) Date of publication of application: **08.04.2026**
(21) Application number: 24810489.5
(22) Date of filing: 24.05.2024
(51) Int. Cl.: A01D 34/00

(54) **ELECTRIC TOOL**

(30) Priority: 25.05.2023 CN 202310601918
(71) Applicant: Positec Power Tools (Suzhou) Co., Ltd., Suzhou, Jiangsu 215123 (CN)
(72) Inventor: CHEN, Yanan, Suzhou, Jiangsu 215123 (CN); LIU, Zhengwei, Suzhou, Jiangsu 215123 (CN); YANG, Xiaoling, Suzhou, Jiangsu 215123 (CN); ZHANG, Tijian, Suzhou, Jiangsu 215123 (CN); XIAO, Haibo, Suzhou, Jiangsu 215123 (CN)
(74) Representative: Kilburn & Strode LLP
(86) International application number: PCT/CN2024/095253
(87) International publication number: WO 2024/240254

(57) **Abstract**

The present application provides a power tool, wherein a connecting tube used in the power tool is at least arranged with a first material layer made of carbon fiber material and a second material layer made of non-carbon fiber material in a radial direction thereof, the stiffness of the second material layer is smaller than the stiffness of the first material layer, and the toughness of the second material layer is greater than the toughness of the first material layer. On one hand, the above-mentioned connecting tube has a small weight, making the power tool lighter, so that an operator can work more easily; on the other hand, since the connecting tube has good stiffness and toughness, the connecting tube has good impact resistance performance and buffering performance, when the connecting tube falls laterally and collides with protruding structures on the ground, the connecting tube is not prone to fracture and large deformation damage, and users also have better hand feel during use.

## Description

### TECHNICAL FIELD

The present application, including embodiments of the present application, relates to the field of power tool technology, and specifically relates to a power tool.

### BACKGROUND

In some power tools, such as grass trimmers, pole saws, etc., connecting tubes that connect working head assemblies (such as cutting units) and gripping assemblies are generally metal tubes (such as aluminum tubes). Based on users' strong demand for lightweight power tools, some manufacturers are currently considering using connecting tubes made of lightweight all-carbon fiber materials to replace traditional metal tubes. However, although connecting tubes made of all-carbon fiber materials have light weight, their vibration absorption ability and buffering performance are poor, resulting in unsatisfactory performance of power tools. In addition, the use of all-carbon fiber materials directly increases the cost of the entire connecting tube, causing considerable trouble for manufacturers.

### SUMMARY

To overcome a defect of a prior art, a problem to be solved by a present disclosure embodiment is to provide a power tool having a connecting tube that has a light weight, impact resistance performance and buffering performance meeting demand, and a low cost.

To achieve the objective, the present disclosure embodiment provides a technical solution: a power tool, the power tool comprising a working head assembly, the working head assembly comprising a working head for operation; a power assembly, the power assembly driving the working head; a battery pack, the battery pack supplying power to the power assembly; a gripping assembly, for a user to grip; a connecting tube, disposed between the working head assembly and the gripping assembly, the connecting tube is at least arranged with a first material layer made of a carbon fiber material and a second material layer made of a non-carbon fiber material, the stiffness of the second material layer is smaller than the stiffness of the first material layer, and the toughness of the second material layer is greater than the toughness of the first material layer.

In one implementation thereof, a total layer thickness of the second material layer accounts for 50% to80% of a total wall thickness of the connecting tube.

In one implementation thereof, the second material layer is a glass fiber layer.

In one implementation thereof, the second material layer comprises axial fiber bundles extending and arranged along an axial direction of the connecting tube, a ratio of a total thickness of the axial fiber bundles in a radial direction of the connecting tube to the total layer thickness of the second material layer is greater than or equal to 80%.

In one implementation thereof, an outermost layer of the connecting tube in the radial direction thereof is a carbon fiber outer layer formed by the first material layer.

In one implementation thereof, a fiber arrangement direction of the carbon fiber outer layer is different from a fiber arrangement direction of an adjacent material layer.

In one implementation thereof, the first material layer comprises axial fiber bundles extending and arranged along the axial direction of the connecting tube, a ratio of a total thickness of the axial fibers bundle in the radial direction of the connecting tube to a total layer thickness of the first material layer is greater than or equal to 40%.

In one implementation thereof, a number of the first material layers is configured as one layer, and the carbon fiber outer layer is a woven structure formed by multiple fiber bundles; or, a number of the first material layers is configured as greater than or equal to two layers, the carbon fiber outer layer is a woven structure formed by multiple fiber bundles, and remaining first material layers are disposed at an inner side of the carbon fiber outer layer in the radial direction of the connecting tube to form a carbon fiber inner layer, the carbon fiber inner layer comprises the axial fiber bundles arranged and extending along the axial direction of the connecting tube, and a ratio of a total layer thickness of the axial fiber bundles to a total layer thickness of the carbon fiber inner layer is greater than or equal to 50%.

In one implementation thereof, a total weight of the power tool is less than or equal to 7 kg, a wall thickness of the connecting tube is 1.5 mm to 2.0 mm, and a ratio of impact energy that the connecting tube can withstand to the wall thickness of the connecting tube is greater than or equal to 58 J/mm.

In one implementation thereof, the power tool is a grass trimmer, a total weight of the grass trimmer is less than or equal to 7 kg, the battery pack is disposed at one end of the connecting tube located at the gripping assembly, the power assembly is disposed at one end of the connecting tube located at the working head assembly, and the wall thickness of the connecting tube is 1.5 mm to 1.8 mm.

In one implementation thereof, a weight of the power tool as a bare machine, namely after removing the battery pack, is 4.2 kg to 5.5 kg, the power tool is a pole saw, the pole saw comprises a connecting assembly, one end of the connecting assembly is provided with the working head assembly, another end thereof is provided with the battery pack, the power assembly and the gripping assembly, the connecting assembly comprises a telescopic tube and a handle tube, the handle tube is connected to the gripping assembly, the telescopic tube comprises an inner tube and an outer tube, the inner tube is at least partially coaxially sliding nested in the outer tube and one end thereof is connected to the working head assembly, a locking member is further disposed between the inner tube and the outer tube to maintain relative fixation therebetween, the outer tube is disposed between the inner tube and the handle tube, and the connecting tube is configured as the outer tube.

To overcome the defect of the prior art, the problem to be solved by the present disclosure embodiment is to provide the power tool having the connecting tube that has the light weight, the impact resistance performance and the buffering performance meeting demand, and the low cost.

To achieve the objective, the present disclosure embodiment provides the technical solution: a power tool, the power tool comprising a working head assembly, the working head assembly comprising the working head for operation; a power assembly, the power assembly driving the working head; a battery pack, the battery pack supplying power to the power assembly; a gripping assembly, for the user to grip; a connecting tube, disposed between the working head assembly and the gripping assembly, the connecting tube is at least arranged with a first material layer and a second material layer in the radial direction thereof, the first material layer is a carbon fiber layer, and the second material layer is the glass fiber layer.

In one implementation thereof, a total layer thickness of the glass fiber layer accounts for 50% to 80% of the total wall thickness of the connecting tube.

In one implementation thereof, the glass fiber layer comprises the axial fiber bundles extending and arranged along the axial direction of the connecting tube, the ratio of the total thickness of the axial fiber bundles in the radial direction of the connecting tube to the total layer thickness of the glass fiber layer is greater than or equal to 80%.

In one implementation thereof, the outermost layer of the connecting tube in the radial direction thereof is the carbon fiber outer layer formed by the carbon fiber layer.

In one implementation thereof, the fiber arrangement direction of the carbon fiber outer layer is different from the fiber arrangement direction of the material layer adjacent thereto.

In one implementation thereof, the carbon fiber layer comprises the axial fiber bundles extending and arranged along the axial direction of the connecting tube, a ratio of a total thickness of the axial fiber bundles of the carbon fiber layer in the radial direction of the connecting tube to a total layer thickness of the carbon fiber layer is greater than or equal to 40%.

In one implementation thereof, a number of the carbon fiber layers is configured as one layer, and the carbon fiber outer layer is the woven structure formed by multiple fiber bundles; or, a number of the carbon fiber layers is configured as greater than or equal to two layers, the carbon fiber outer layer is the woven structure formed by multiple fiber bundles, and remaining carbon fiber layers are disposed at the inner side of the carbon fiber outer layer in the radial direction of the connecting tube to form the carbon fiber inner layer, the carbon fiber inner layer comprises the axial fiber bundles arranged and extending along the axial direction of the connecting tube, and the ratio of the total layer thickness of the axial fiber bundles to the total layer thickness of the carbon fiber inner layer is greater than or equal to 50%.

In one implementation thereof, the total weight of the power tool is less than or equal to 7 kg, the wall thickness of the connecting tube is 1.5 mm to 2.0 mm, and the ratio of the impact energy that the connecting tube can withstand to the wall thickness of the connecting tube is greater than or equal to 58 J/mm.

In one implementation thereof, the power tool is the grass trimmer, the total weight of the grass trimmer is less than or equal to 7 kg, the battery pack is disposed at the one end of the connecting tube located at the gripping assembly, the power assembly is disposed at the one end of the connecting tube located at the working head assembly, and the wall thickness of the connecting tube is 1.5 mm to 1.8 mm.

In one implementation thereof, the weight of the power tool as the bare machine, namely after removing the battery pack, is 4.2 kg to 5.5 kg, the power tool is the pole saw, the pole saw comprises the connecting assembly, the one end of the connecting assembly is provided with the working head assembly, the another end thereof is provided with the battery pack, the power assembly and the gripping assembly, the connecting assembly comprises the telescopic tube and the handle tube, the handle tube is connected to the gripping assembly, the telescopic tube comprises the inner tube and the outer tube, the inner tube is at least partially coaxially sliding nested in the outer tube and the one end thereof is connected to the working head assembly, the locking member is further disposed between the inner tube and the outer tube to maintain relative fixation therebetween, the outer tube is disposed between the inner tube and the handle tube, and the connecting tube is configured as the outer tube.

To overcome the defect of the prior art, a problem to be solved by the present disclosure embodiment is to provide a power tool having a split connecting tube that has a light weight, impact resistance performance and buffering performance meeting demand, and a low cost.

To achieve the objective, the present disclosure embodiment provides the technical solution: a power tool, the power tool comprising a working head assembly, the working head assembly comprising a working head for operation; a power assembly, the power assembly driving the working head; a battery pack, the battery pack supplying power to the power assembly; a gripping assembly, for the user to grip; a connecting tube, the connecting tube comprising a first connecting tube connected to the working head assembly and a second connecting tube connected to the gripping assembly, the first connecting tube and/or the second connecting tube is at least arranged with a first material layer made of the carbon fiber material and a second material layer made of the non-carbon fiber material in the radial direction thereof, the stiffness of the second material layer is smaller than the stiffness of the first material layer, and the toughness of the second material layer is greater than the toughness of the first material layer.

In one implementation thereof, a total layer thickness of the second material layer in the first connecting tube accounts for 50% to 80% of a total wall thickness of the first connecting tube.

In one implementation thereof, the second material layer of the first connecting tube is the glass fiber layer.

In one implementation thereof, the second material layer of the first connecting tube comprises the axial fiber bundles extending and arranged along an axial direction of the first connecting tube, a ratio of a total thickness of the axial fiber bundles in a radial direction of the first connecting tube to the total layer thickness of the second material layer is greater than or equal to 80%.

In one implementation thereof, an outermost layer of the first connecting tube in the radial direction thereof is the carbon fiber outer layer formed by the first material layer.

In one implementation thereof, a fiber arrangement direction of the carbon fiber outer layer of the first connecting tube is different from a fiber arrangement direction of the material layer adjacent thereto.

In one implementation thereof, the first material layer of the first connecting tube comprises the axial fiber bundles extending and arranged along the axial direction of the first connecting tube, the ratio of the total thickness of the axial fiber bundles in the radial direction of the first connecting tube to a total layer thickness of the first material layer is greater than or equal to 40%.

In one implementation thereof, a number of the first material layers of the first connecting tube is configured as one layer, and the carbon fiber outer layer of the first connecting tube is the woven structure formed by multiple fiber bundles; or, a number of the first material layers of the first connecting tube is configured as greater than or equal to two layers, the carbon fiber outer layer of the first connecting tube is the woven structure formed by multiple fiber bundles, and remaining first material layers are disposed at an inner side of the carbon fiber outer layer in the radial direction of the first connecting tube to form the carbon fiber inner layer, the carbon fiber inner layer of the first connecting tube comprises the axial fiber bundles arranged and extending along the axial direction of the first connecting tube, and the ratio of the total layer thickness of the axial fiber bundles to the total layer thickness of the carbon fiber inner layer is greater than or equal to 50%.

In one implementation thereof, a total layer thickness of the second material layer in the second connecting tube accounts for 50% to 80% of a total wall thickness of the second connecting tube.

In one implementation thereof, the second material layer of the second connecting tube is the glass fiber layer.

In one implementation thereof, the second material layer of the second connecting tube comprises the axial fiber bundles extending and arranged along an axial direction of the second connecting tube, a ratio of a total thickness of the axial fiber bundles in a radial direction of the second connecting tube to the total layer thickness of the second material layer is greater than or equal to 80%.

In one implementation thereof, an outermost layer of the second connecting tube in the radial direction thereof is the carbon fiber outer layer formed by the carbon fiber layer.

In one implementation thereof, a fiber arrangement direction of the carbon fiber outer layer of the second connecting tube is different from a fiber arrangement direction of the material layer adjacent thereto.

In one implementation thereof, the first material layer of the second connecting tube comprises the axial fiber bundles extending and arranged along the axial direction of the second connecting tube, the ratio of the total thickness of the axial fiber bundles in the radial direction of the second connecting tube to a total layer thickness of the first material layer is greater than or equal to 40%.

In one implementation thereof, a number of the first material layers of the second connecting tube is configured as one layer, and the carbon fiber outer layer is the woven structure formed by multiple fiber bundles; or, a number of the first material layers of the second connecting tube is configured as greater than or equal to two layers, the carbon fiber outer layer of the second connecting tube is the woven structure formed by multiple fiber bundles, and remaining first material layers are disposed at an inner side of the carbon fiber outer layer in the radial direction of the second connecting tube to form the carbon fiber inner layer, the carbon fiber inner layer of the second connecting tube comprises the axial fiber bundles arranged and extending along the axial direction of the second connecting tube, and the ratio of the total layer thickness of the axial fiber bundles to the total layer thickness of the carbon fiber inner layer is greater than or equal to 50%.

A problem to be solved by the present disclosure embodiment is to provide a power tool having an outer tube that has a light weight, impact resistance performance and buffering performance meeting demand, and a low cost, and an inner tube that has a light weight, impact resistance performance, and bending resistance performance meeting demand.

A technical solution adopted by the present disclosure embodiment to solve the prior art problem is: a power tool, the power tool comprising: the working head assembly, the working head assembly comprising the working head for operation; the power assembly, the power assembly driving the working head; the battery pack, the battery pack supplying power to the power assembly; the gripping assembly, for the user to grip; the connecting assembly, disposed between the working head assembly and the gripping assembly; one end of the connecting assembly is provided with the working head assembly, another end thereof is provided with the battery pack, the power assembly and the gripping assembly, the connecting assembly comprises the first connecting tube, the second connecting tube and the handle tube, the handle tube is connected to the gripping assembly, the first connecting tube is closer to the working head assembly relative to the second connecting tube, the second connecting tube is connected to the first connecting tube, and the second connecting tube is closer to the gripping assembly relative to the first connecting tube, wherein the first connecting tube is at least arranged with a carbon fiber layer made of the carbon fiber material in the radial direction thereof, the second connecting tube is at least arranged with a carbon fiber layer made of the carbon fiber material in the radial direction thereof, wherein a ratio of a total layer thickness of the carbon fiber layer in the first connecting tube to a total wall thickness of the first connecting tube is greater than a ratio of a total layer thickness of the carbon fiber layer in the second connecting tube to a total wall thickness of the second connecting tube.

In one implementation thereof, the first connecting tube and the second connecting tube form the telescopic tube, the first connecting tube is configured as the inner tube of the telescopic tube, the second connecting tube is configured as the outer tube of the telescopic tube, the inner tube is at least partially coaxially sliding nested in the outer tube and the one end thereof is connected to the working head assembly, the locking member is further disposed between the inner tube and the outer tube to maintain relative fixation therebetween, and the outer tube is disposed between the inner tube and the handle tube.

In one implementation thereof, a ratio of a total layer thickness of the carbon fiber layer in the inner tube to a total wall thickness of the inner tube is 100%.

In one implementation thereof, the inner tube is arranged with at least two layers of the carbon fiber layer in the radial direction thereof, the carbon fiber layer located at an outermost layer in the radial direction of the inner tube is the woven structure formed by multiple fiber bundles, and remaining carbon fiber layers are unidirectional structures formed by multiple fiber bundles.

In one implementation thereof, the unidirectional structure comprises an axial structure and a circumferential structure, multiple fiber bundles extend along an axial direction of the inner tube to form the axial structure, multiple fiber bundles extend along a circumferential direction of the inner tube to form the circumferential structure, wherein a ratio of a total layer thickness of the carbon fiber layer adopting the axial structure to a total layer thickness of the carbon fiber layer adopting the circumferential structure is 3:2.

In one implementation thereof, the outer tube is further arranged with one layer or at least two layers of the glass fiber layer made of a glass fiber material in the radial direction thereof, and the total layer thickness of the glass fiber layer accounts for 50% to 80% of a total wall thickness of the outer tube.

In one implementation thereof, the glass fiber layer of the outer tube comprises axial fiber bundles extending and arranged along an axial direction of the outer tube, a ratio of a total thickness of the axial fiber bundles in a radial direction of the outer tube to the total layer thickness of the glass fiber layer is greater than or equal to 80%.

In one implementation thereof, an outermost layer of the outer tube in a radial direction thereof is a carbon fiber outer layer formed by the carbon fiber layer.

In one implementation thereof, a fiber arrangement direction of the carbon fiber outer layer of the outer tube is different from a fiber arrangement direction of an adjacent material layer.

In one implementation thereof, the carbon fiber layer of the outer tube comprises axial fiber bundles extending and arranged along the axial direction of the outer tube, a ratio of a total thickness of the axial fiber bundles in the radial direction of the outer tube to a total layer thickness of the carbon fiber layer is greater than or equal to 40%.

In one implementation thereof, a number of the carbon fiber layers of the outer tube is configured as one layer, and the carbon fiber outer layer is the woven structure formed by multiple fiber bundles; or, a number of the carbon fiber layers of the outer tube is configured as greater than or equal to two layers, the carbon fiber outer layer of the outer tube is the woven structure formed by multiple fiber bundles, and remaining carbon fiber layers are disposed at an inner side of the carbon fiber outer layer in the radial direction of the outer tube to form the carbon fiber inner layer, the carbon fiber inner layer of the outer tube comprises the axial fiber bundles extending and arranged along the axial direction of the outer tube, and a ratio of a total thickness of the axial fiber bundles in the radial direction of the outer tube to a total layer thickness of the carbon fiber layer is greater than or equal to 60%.

In one implementation thereof, the handle tube is a metal tube.

Compared with the prior art, in the preferred embodiments of the present application, on a premise that the connecting tube uses the carbon fiber material, by doping glass fiber and controlling a layer thickness proportion of the glass fiber layer and the carbon fiber layer, a usage amount proportion of the glass fiber and the carbon fiber is controlled, such that the connecting tube has advantages of both toughness and stiffness, has good impact resistance performance when dropped, has better toughness compared to the connecting tube adopting all-carbon fiber, has a lower vibration hand feel during a use process, has good buffering performance, and at the same time has a lower material cost.

### BRIEF DESCRIPTION OF THE DRAWINGS

In order to more clearly illustrate a technical solution in an embodiment of the present application or in a prior art, a simple introduction will be made below to an accompanying drawing required for use in a description of the embodiment or the prior art. Obviously, the accompanying drawing in the description below is merely some embodiments of the present application. For an ordinary skill in the art, other accompanying drawings can also be obtained based on these accompanying drawings without creative labor.
FIG. 1 is a structural schematic diagram of a material layer adopting a woven structure;
FIG. 2 is a structural schematic diagram of an axial structure in which a fiber extension direction in a unidirectional structure adopted by a material layer is parallel to a tube body axial direction;
FIG. 3 is a cross-sectional view of one structure of a connecting tube when a number of the first material layers, i.e., the carbon fiber layers, and a number of the second material layers, i.e., the glass fiber layers, are both configured as one layer;
FIG. 4 is a cross-sectional view of another structure of the connecting tube when the number of the first material layers, i.e., the carbon fiber layers, and the number of the second material layers, i.e., the glass fiber layers, are both configured as one layer;
FIG. 5 is a cross-sectional view of one structure of the connecting tube when the number of the first material layers, i.e., the carbon fiber layers, is configured as one layer, and the number of the second material layers, i.e., the glass fiber layers, is configured as greater than or equal to two layers;
FIG. 6 is a cross-sectional view of another structure of the connecting tube when the number of the first material layers, i.e., the carbon fiber layers, is configured as one layer, and the number of the second material layers, i.e., the glass fiber layers, is configured as greater than or equal to two layers;
FIG. 7 is a cross-sectional view of one structure of the connecting tube when the number of the first material layers, i.e., the carbon fiber layers, is configured as greater than or equal to two layers, and the number of the second material layers, i.e., the glass fiber layers, is configured as one layer;
FIG. 8 is a cross-sectional view of another structure of the connecting tube when the number of the first material layers, i.e., the carbon fiber layers, is configured as greater than or equal to two layers, and the number of the second material layers, i.e., the glass fiber layers, is configured as one layer;
FIG. 9 is a cross-sectional view of yet another structure of the connecting tube when the number of the first material layers, i.e., the carbon fiber layers, is configured as greater than or equal to two layers, and the number of the second material layers, i.e., the glass fiber layers, is configured as one layer;
FIG. 10 is a cross-sectional view of one structure of the connecting tube when the number of the first material layers, i.e., the carbon fiber layers, and the number of the second material layers, i.e., the glass fiber layers, are both configured as greater than or equal to two layers;
FIG. 11 is a cross-sectional view of another structure of the connecting tube when the number of the first material layers, i.e., the carbon fiber layers, and the number of the second material layers, i.e., the glass fiber layers, are both configured as greater than or equal to two layers;
FIG. 12 is a cross-sectional view of a preferred structure of a connecting tube provided by the present application;
FIG. 13 is a schematic diagram of a limiting structure protruding from an inner sidewall of the connecting tube;
FIG. 14 is a structural schematic diagram of the limiting structure of FIG. 13 cooperating with a lining;
FIG. 15 is a structural schematic diagram of a clamp having a C-shaped portion;
FIG. 16 is a structural schematic diagram of a clamp having a U-shaped portion;
FIG. 17 is a structural schematic diagram of a front-mounted grass trimmer applying the connecting tube provided by the present application;
FIG. 18 is a structural schematic diagram of an existing rear-mounted grass trimmer;
FIG. 19 is a structural schematic diagram of a pole saw applying a telescopic tube provided by the present application;
FIG. 20 is a structural schematic diagram of a multi-working head power tool applying a split connecting tube provided by the present application.

### DETAILED DESCRIPTION

The technical solutions of the present application will be described clearly and completely below with reference to the accompanying drawings. Obviously, the described embodiments are some embodiments of the present application, rather than all embodiments. Based on the embodiments in the present application, all other embodiments obtained by those of ordinary skill in the art without making creative efforts fall within the protection scope of the present application.

For the field of power tools, most power tools require users to grip them for long periods of operation, therefore, suppressing the maximization of power tool weight is important, especially for power tools having connecting tubes 10 such as grass trimmers, pole saws, brush cutters, etc. Generally, power tools 100, 200, 300, 400 having connecting tubes 10 include a working head assembly 20, a power assembly, a battery pack 30, and a gripping assembly 40, wherein the working head assembly 20 includes a working head 201, the power assembly includes a motor that provides driving force for the power tool and a control board that controls motor rotation, the battery pack 30 supplies power to the motor, the battery pack 30 preferably adopts a lithium battery pack and is installed at one end of the connecting tube 10 located at the gripping assembly 40 in a detachable manner. The gripping assembly 40 is for user gripping and is provided with an operation switch for users to control the tool.

The connecting tube 10 can serve as a connecting component to connect the working head assembly 20 and the gripping assembly 40 of the power tool. In some power tools 100, 200, 300, the connecting tube 10 is an integral tube structure, and in some multi-working head power tools 400, the connecting tube 10 may be a split tube, including a first connecting tube 107 and a second connecting tube 108, the first connecting tube 107 is connected to various different working head assemblies 20, the second connecting tube 108 is connected to the gripping assembly 40, and the working head assembly 20 and the gripping assembly 40 of the power tool 400 are connected through connection of the first connecting tube 107 and the second connecting tube 108. For ease of understanding, taking grass trimmers 100, 200 or a power tool 400 with a working head being a grass trimming head as examples, one end of the connecting tube 10 or the second connecting tube 108 in the connecting tube 10 can be connected to the gripping assembly 40 of the grass trimmers 100, 200 or the multi-tool head power tool 400 (the gripping assembly 40 is an end for being gripped and controlled by an operator), and another end of the connecting tube 10 or the first connecting tube 107 in the connecting tube 10 can be connected to the working head assembly 20 of the grass trimmers 100, 200 or the multi-tool head power tool 400 (the working head assembly 20 is an end for performing grass trimming tasks). Taking a pole saw 300 as an example, the connecting tube 10 can serve as part of a connecting component connecting the gripping assembly 40 of the pole saw 300 (the gripping assembly 40 is an end of the pole saw 300 for being gripped by an operator and for controlling and adjusting a height of the working head assembly 20 relative to the ground) and the working head assembly 20 (the working head assembly 20 is an end for performing cutting of high trees).

Currently, the technical approach of reducing the weight of the connecting tube 10 can be adopted to meet the demand for lightweight design, but based on the actual usage scenarios of such tools, the connecting tube 10 must also have good impact resistance performance to prevent tube fracture caused by tool drops, which would cause connected components to fly out and cause injury accidents. To solve the above problems, some manufacturers have attempted to use all-carbon fiber materials to make the connecting tube 10. Although this takes into account both lightweight and impact resistance performance requirements, some new problems have emerged for specific power tools in actual processes. For example, for grass trimmers 100, 200, although the all-carbon fiber connecting tube 10 meets the requirements for lightweight and impact resistance performance, during use the connecting tube 10 will transmit vibrations from the working head assembly 20 during the cutting process to the gripping assembly 40, causing users to experience hand numbness and poor tactile sensation. For another example, for pole saws 300, the connecting tube 10 of such products generally adopts a telescopic tube 10 composed of an inner tube 101 and an outer tube 102. Based on the usage scenarios and methods of pole saws 300, when the inner tube 101 is connected to the working head assembly 20 and drops occur, it is usually the inner tube 101 that collides with the ground or sharp objects, while the outer tube 102 is closer to the user's gripping position. Therefore, the stiffness requirements for the outer tube 102 relative to the inner tube 101 do not need to be particularly strict, but rather, relative to the inner tube 101, the outer tube 102 needs to have better usage comfort, namely reducing user hand numbness. However, using all-carbon fiber material for the outer tube 102 results in redundant impact resistance performance and poor buffering performance, and adopting the all-carbon fiber solution further increases costs, resulting in low cost-effectiveness.

In the present application, by improving the structure, materials and other aspects of the connecting tube 10, the requirements for lightweight, impact resistance performance, and buffering performance are comprehensively satisfied, the comprehensive mechanical performance is improved, making the power tools 100, 200, 300, 400 using the connecting tube 10 have better usage tactile sensation, while also further reducing material costs.

The connecting tube 10 is formed by compounding different types of fibers, and its main structure comprises a first material layer 103 made of carbon fiber material and a second material layer 104 made of non-carbon fiber material arranged in a radial direction, the main components of both the first material layer 103 and the second material layer 104 are fibers, but the types of fibers are different. Further, the difference of adopting the second material layer 104 with different fiber types from the first material layer 103 made of carbon fiber material is that the stiffness of the second material layer 104 is smaller than the stiffness of the first material layer 103, that is to say, the elastic modulus of fibers for preparing the second material layer 104 is smaller than the elastic modulus of carbon fibers, the toughness of the second material layer 104 is greater than the toughness of the first material layer 103, that is to say, the fracture strain of fibers for preparing the second material layer 104 is greater than the fracture strain of carbon fibers. By selecting materials in this way, the connecting tube 10 can achieve lightweight compared to existing aluminum tubes while also meeting the requirements for both toughness and stiffness.

In the present application, the material of the first material layer 103 is carbon fiber, the material of the second material layer 104 is glass fiber or Kevlar fiber, preferably glass fiber, that is to say, the connecting tube 10 is a composite tube formed by compounding glass fiber and carbon fiber. Among them, the reason why the material of the second material layer 104 is preferably glass fiber is that glass fiber has good toughness and certain stiffness, which can significantly improve the toughness of the entire connecting tube 10, and the reason why the material of the first material layer 103 is preferably carbon fiber is that carbon fiber has high stiffness and certain toughness, which can ensure the stiffness of the entire connecting tube 10, enabling the connecting tube 10 to better meet working requirements such as connection, support, and force bearing. In this way, the glass fiber second material layer 104 mainly enhances toughness and supplements stiffness, while the carbon fiber first material layer 103 mainly enhances stiffness and supplements toughness, so that the connecting tube 10 has both excellent toughness and stiffness, improving the comprehensive mechanical performance of the connecting tube 10.

At the same time, the present application also limits the proportion of carbon fiber and glass fiber, that is, the number of the second material layers 104 is configured as one layer or at least two layers, the total layer thickness of the second material layer 104 accounts for 50% to 80% of the total wall thickness of the connecting tube 10, correspondingly, the number of the first material layers 103 is configured as one layer or at least two layers, the total layer thickness of the first material layer 103 accounts for 20% to 50% of the total wall thickness of the connecting tube 10. For example, the total layer thickness of the second material layer 104 accounts for 55% of the total wall thickness of the connecting tube 10, and the total layer thickness of the first material layer 103 accounts for 45% of the total wall thickness of the connecting tube 10, or the total layer thickness of the second material layer 104 accounts for 60% of the total wall thickness of the connecting tube 10, and the total layer thickness of the first material layer 103 accounts for 35% of the total wall thickness of the connecting tube 10, or the total layer thickness of the second material layer 104 accounts for 65% of the total wall thickness of the connecting tube 10, and the total layer thickness of the first material layer 103 accounts for 35% of the total wall thickness of the connecting tube 10, or the total layer thickness of the second material layer 104 accounts for 70% of the total wall thickness of the connecting tube 10, and the total layer thickness of the first material layer 103 accounts for 30% of the total wall thickness of the connecting tube 10, or the total layer thickness of the second material layer 104 accounts for 75% of the total wall thickness of the connecting tube 10, and the total layer thickness of the first material layer 103 accounts for 25% of the total wall thickness of the connecting tube 10, etc. If the total layer thickness of the carbon fiber first material layer 103 is too large, it correspondingly means that the total layer thickness of the glass fiber second material layer 104 is too small, which will make the stiffness of the connecting tube 10 meet requirements, but the overall toughness will be poor; if the total layer thickness of the carbon fiber first material layer 103 is too small, it correspondingly means that the total layer thickness of the glass fiber second material layer 104 is too large, which will make the toughness of the connecting tube 10 meet requirements, but the overall stiffness will be low. Therefore, by limiting the proportion of the total layer thickness of the first material layer 103 and the second material layer 104, the toughness and stiffness of the connecting tube 10 can be better coordinated to meet the requirements for buffering performance and impact resistance performance, further optimizing the comprehensive mechanical performance of the connecting tube 10, having good vibration absorption characteristics during use, and excellent buffering performance. At the same time, in order to be similar to the mechanical performance of existing aluminum tubes, it is preferred that the total layer thickness of the second material layer 104 accounts for 75% of the total wall thickness of the connecting tube 10, and the total layer thickness of the first material layer 103 accounts for 25% of the total wall thickness of the connecting tube 10.

By setting the wall thickness of the connecting tube 10 within the range of 1.5 mm to 2.0 mm, for example, 1.6 mm, 1.7 mm, 1.8 mm, 1.9 mm, etc., it is made similar to or the same as the wall thickness of existing aluminum tubes, so that it can replace aluminum tubes and directly connect to the working head assembly 20 and the gripping assembly 40.

The above-mentioned connecting tube 10, when serving as the connecting tube 10 of power tools 100, 200, 300, 400 such as grass trimmers 100, 200 to connect the gripping assembly 40 and the working head assembly 20, on one hand, has reduced weight relative to aluminum tubes, making the power tools 100, 200, 300, 400 lighter, so that operators can more easily carry the power tools 100, 200, 300, 400 to work; on the other hand, since the connecting tube 10 has good stiffness and toughness, the overall impact resistance performance and buffering performance of the connecting tube 10 are better.

When the connecting tube 10 falls laterally, protruding structures on the ground will form an impact on the middle portion in the axial direction of the connecting tube 10. To make the connecting tube 10 less prone to fracture and large deformation, it is preferred to set the outermost layer of the connecting tube 10 in the radial direction as a carbon fiber outer layer 105 formed by the first material layer 103.

Specifically, in the radial direction of the connecting tube 10, the first material layer 103 and the second material layer 104 are arranged in sequence, and the outermost layer of the connecting tube 10 in the radial direction is set as a carbon fiber outer layer 105 formed by the first material layer 103. The number of the first material layers 103 is configured as one layer, the first material layer 103 is the carbon fiber outer layer 105, and the remaining second material layers 104 are all wrapped by the carbon fiber outer layer 105, nested within the carbon fiber outer layer 105 and connected to the carbon fiber outer layer 105, the second material layer 104 forms an inner sidewall of the connecting tube 10. Alternatively, the number of the first material layers 103 is configured as greater than or equal to two layers, the outermost layer in the radial direction of the connecting tube 10 is a carbon fiber outer layer 105 formed by the first material layer 103, and the remaining first material layers 103 and second material layers 104 are arranged as needed in sequence and are wrapped and nested within the carbon fiber outer layer 105 and connected thereto, one of the remaining first material layers 103 or the second material layer 104 forms an inner sidewall of the connecting tube 10. Since the stiffness of the first material layer 103 is greater than the stiffness of the second material layer 104, the present application sets the outermost layer in the radial direction of the connecting tube 10 as a carbon fiber outer layer 105 formed by the first material layer 103. Compared to a connecting tube 10 having the second material layer 104 made of glass fiber as the radially outermost layer, when the connecting tube 10 falls and collides with protruding structures on the ground, even if subjected to impact, the damage will be less, making the connecting tube 10 have excellent vertical axial impact resistance performance while also having good surface appearance performance.

In the present application, the basic shape of fibers is filament-like or linear, that is, the basic constituent units of the first material layer 103 and the second material layer 104 are fiber filaments, a large number of fiber filaments collectively form fiber bundles 106, and multiple fiber bundles 106 are arranged in different ways to form different fiber structures.

On this basis, the first material layer 103 comprises axial fiber bundles extending and arranged along the axial direction of the connecting tube 10, wherein controlling the ratio of a total thickness of the axial fiber bundles in the radial direction of the connecting tube 10 to a total layer thickness of the first material layer 103 to be greater than 40% can make the connecting tube 10 have stiffness performance that meets requirements.

Further, in an optional embodiment, the number of the first material layers 103 is configured as one layer, the layer is the carbon fiber outer layer 105, and the carbon fiber outer layer 105 is a woven structure formed by multiple fiber bundles 106; alternatively, the number of the first material layers 103 is configured as greater than or equal to two layers, wherein one first material layer 103 forms the carbon fiber outer layer 105, the carbon fiber outer layer 105 is a woven structure formed by multiple fiber bundles 106, and the remaining first material layers 103 are disposed at an inner side of the carbon fiber outer layer 105 in the radial direction of the connecting tube 10 to form carbon fiber inner layers 103, these carbon fiber inner layers 103 may be unidirectional structures or woven structures formed by multiple fiber bundles 106.

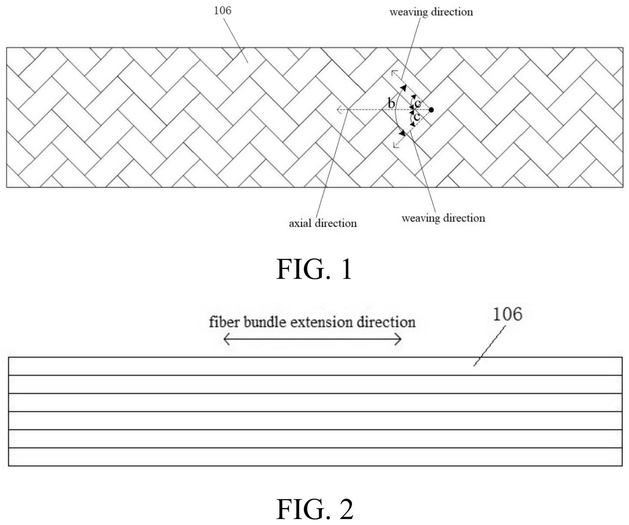

As shown in Figure 1, the forming structure of the carbon fiber outer layer 105 or part of the carbon fiber inner layers 103 is a woven structure, that is to say, during the forming process, multiple parallel fiber filaments are gathered into fiber bundles 106, then half of all fiber bundles 106 extend along a first direction, and the remaining half extend along a second direction, there is a certain angle between the first direction and the second direction, such as 60 degrees, 90 degrees or 120 degrees, etc., and then the fiber bundles 106 along the first direction and the fiber bundles 106 along the second direction cross-extend with each other to form a woven structure (this process is similar to the weaving process of cloth), that is, the fiber bundles 106 in the first direction and the fiber bundles 106 in the second direction are cross-woven. Such arrangement can make the fiber bundles 106 of the carbon fiber outer layer 105 and part of the carbon fiber inner layers 103 extend and connect along different directions (i.e., the first direction and the second direction), improving the stiffness of the carbon fiber outer layer 105 and part of the carbon fiber inner layers 103, while also improving the impact resistance performance of the carbon fiber outer layer 105 and part of the carbon fiber inner layers 103, thereby further improving the mechanical performance of the carbon fiber outer layer 105 and part of the carbon fiber inner layers 103.

As shown in Figure 2, the forming structure of part of the carbon fiber inner layers 103 is a unidirectional structure where fiber bundles 106 extend along the same direction, for example, extending along the axial direction of the connecting tube 10, that is to say, one carbon fiber inner layer 103 comprises an axial structure composed of axial fiber bundles 106 extending and arranged along the axial direction of the connecting tube 10. Such arrangement can further improve the bending stiffness and axial strength of the connecting tube 10, thereby further improving the impact resistance performance of the connecting tube 10, while also improving the rigidity of the carbon fiber inner layer 103 and optimizing the mechanical performance of the carbon fiber inner layer 103.

In the above optional embodiments, the number of the first material layers 103 is configured as greater than or equal to two layers, the carbon fiber outer layer 105 adopts a woven structure, and the remaining carbon fiber inner layers 103 may all adopt unidirectional structures or partially adopt unidirectional structures and partially adopt woven structures, wherein the unidirectional structure preferentially adopts an axial structure where fiber bundles 106 extend and are arranged along the axial direction of the connecting tube 10. By controlling the ratio of a total layer thickness of the carbon fiber inner layers 103 adopting the axial structure to a total layer thickness of the carbon fiber inner layers 103 to be greater than or equal to 50%, the connecting tube 10 can have better impact resistance and ensure the continuity of the overall strength of the connecting tube 10.

In an optional embodiment, the second material layer 104 may be set according to the same principle as the above embodiment, that is, the number of the second material layers 104 is configured as one layer, the second material layer 104 is a woven structure or unidirectional structure formed by multiple fiber bundles 106. If a unidirectional structure is selected, it is preferred to use an axial structure formed by fiber bundles 106 all arranged parallel along the axial direction of the connecting tube 10; alternatively, the number of the second material layers 104 is configured as greater than or equal to two layers, the second material layer 104 may all adopt unidirectional structures or partially adopt unidirectional structures and partially adopt woven structures, with the unidirectional structure mainly being an axial structure formed by fiber bundles 106 all arranged parallel along the axial direction of the connecting tube 10, or it can be understood that the second material layer 104 comprises axial fiber bundles 106 extending and arranged along the axial direction of the connecting tube 10. By controlling the ratio of a total layer thickness of the second material layer 104 adopting the axial structure to a total layer thickness of the second material layer 104, namely the ratio of a total thickness of the axial fiber bundles 106 in the radial direction of the connecting tube 10 to the total layer thickness of the second material layer 104, to be greater than or equal to 80%, the fracture elongation rate δ of the connecting tube 10 is greater than or equal to 2.5%, so as to have good toughness and vibration absorption performance. Compared to aluminum tubes with the same wall thickness, under the same operating conditions, the connecting tube 10 of the present application has smaller vibration and better hand feel.

In the present application, as shown in Figure 1, the weaving direction of the woven structure refers to the respective extending directions of two mutually crossing fiber bundles 106, and the bisector of angle b between these two fiber bundles 106 extends along the axial direction of the connecting tube 10, that is to say, the angles c between these two fiber bundles 106 and the axis of the connecting tube 10 are the same and are half of the angle b between these two fiber bundles 106. In this way, by making the bisector of the angle between the first direction and the second direction parallel to the axial direction of the connecting tube 10, the woven structure forming the connecting tube 10 can be made into a symmetrical structure. When the connecting tube 10 is subjected to impact perpendicular to the axial direction (i.e., radial direction), the symmetrical structure can further enhance the impact resistance performance of the connecting tube 10, therefore it is preferred to set the woven structure symmetrically about the axial direction.

It should be noted that the angles between the first direction and the second direction and the axial direction should not be too large or too small. If the angles between the first direction and the second direction and the axial direction are too large, the fiber layer will have small toughness while having large stiffness. If the angles between the first direction and the second direction and the axial direction are too small, the fiber layer will have large toughness while having small stiffness. Preferably, the angles between the first direction and the second direction and the axial direction are 45 degrees.

Further, the extension direction of the fiber bundles 106 in the unidirectional structure is the same as the axial direction of the connecting tube 10 (the extension direction of the fiber bundles 106 in this case is shown in Figure 2) to form axial fiber bundles 106, that is, the fiber bundles 106 forming the unidirectional structure extend along the axial direction of the connecting tube 10 to form an axial structure. Alternatively, the extension direction of the fiber bundles 106 of the unidirectional structure can be the same as the circumferential direction of the connecting tube 10, that is, the fiber bundles 106 forming the unidirectional structure are perpendicular to the axial direction of the connecting tube 10 in the horizontal plane. Since the unidirectional structure where fiber bundles 106 extend along a single direction is more suitable for a single force direction (this force direction is, for example, a direction perpendicular to the axial direction), setting the extension direction of the fiber bundles 106 in the unidirectional structure along the axial direction of the connecting tube 10 can further improve the toughness of the connecting tube 10.

Alternatively, instead of making the fiber bundles 106 of the unidirectional structure extend along straight lines, the fiber bundles 106 can be made to extend spirally, specifically spirally around the axis of the connecting tube 10, so that the extension direction of the fiber bundles 106 of the unidirectional structure has an angle greater than 0 degrees and less than 90 degrees with the axial direction of the connecting tube 10. Among them, the angle greater than 0 degrees and less than 90 degrees refers to dividing the spiral structure into multiple spiral segments of smaller length. Since the length of each spiral segment is small, the spiral segment can be approximately regarded as a straight segment, and the angle between the straight segment and the axis of the connecting tube 10 ranges from 0 degrees to 90 degrees, for example, it can be 30 degrees, 45 degrees or 60 degrees, etc. The larger the angle value, the smaller the pitch of the spiral structure. The unidirectional structure formed in this way can also make the connecting tube 10 have good comprehensive performance in all directions, so that when it serves as the connecting tube 10 of power tools, it can improve the performance of power tools.

Further, based on the above two embodiments, as the connecting tube 10, the fiber bundle 106 arrangement direction of the carbon fiber outer layer 105 which is the outermost layer in the radial direction is set to be different from the fiber arrangement direction of the adjacent material layer. It is preferred to adopt a woven structure for the carbon fiber outer layer 105 which is the outermost layer in the radial direction of the connecting tube 10, and the remaining first material layers 103 and/or second material layers 104 can select fiber arrangement directions that meet the setting requirements.

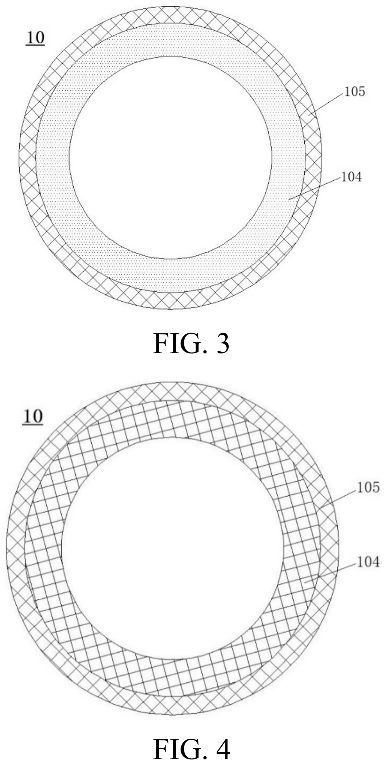

For example, the number of the first material layers 103 is configured as one layer, the number of the second material layers 104 is also configured as one layer, the first material layer 103 is the carbon fiber outer layer 105, the carbon fiber outer layer 105 adopts a woven structure, and the fiber bundle 106 arrangement direction of the woven structure (the arrangement direction is shown in Figure 1) is different from the fiber bundle 106 arrangement direction of the second material layer 104, that is, the second material layer 104 adopts a unidirectional structure, and regardless of whether the fiber bundles 106 of the unidirectional structure extend along the axial direction, circumferential direction, or spiral direction around the axis of the connecting tube 10, they are all different from the weaving direction of the woven structure of the carbon fiber outer layer 105. For example, as shown in Figure 3, the first material layer 103, namely the carbon fiber outer layer 105, adopts a woven structure, the second material layer 104 adopts a unidirectional structure and its fiber bundles 106 extend along the axial direction of the connecting tube 10; alternatively, the second material layer 104 adopts a woven structure, and the weaving direction of the second material layer 104 is different from the weaving direction of the carbon fiber outer layer 105. For example, as shown in Figure 4, the angle between the weaving direction of the second material layer 104 and the axial direction of the connecting tube 10 is 30 degrees, and the angle between the weaving direction of the carbon fiber outer layer 105 and the axial direction of the connecting tube 10 is 45 degrees. Such arrangement can make the mechanical performance of the external first material layer 103 and the internal second material layer 104 more prominent and with higher consistency.

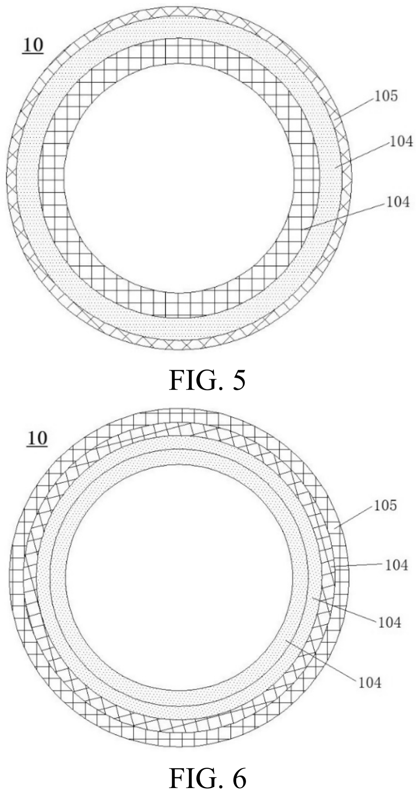

For example, the number of the first material layers 103 is configured as one layer, the number of the second material layers 104 is configured as greater than or equal to two layers, the first material layer 103 is the carbon fiber outer layer 105, the carbon fiber outer layer 105 adopts a woven structure, and the fiber bundle 106 arrangement direction of the woven structure (the arrangement direction is shown in Figure 1) is different from the fiber bundle 106 arrangement direction of the adjacent second material layer 104, that is, the second material layer 104 adjacent to the carbon fiber outer layer 105 adopts a unidirectional structure, and regardless of whether the fiber bundles 106 of the unidirectional structure extend along the axial direction, circumferential direction, or spiral direction around the axis of the connecting tube 10, they are all different from the weaving direction of the woven structure of the carbon fiber outer layer 105. The remaining second material layers 104 may all adopt woven structures, or all adopt unidirectional structures, or partially adopt woven structures and partially adopt unidirectional structures, wherein the unidirectional structure mainly selects the axial structure, and the ratio of a total layer thickness of the second material layers 104 adopting the axial structure to a total layer thickness of the second material layers 104 is greater than or equal to 80%. For example, as shown in Figure 5, in the radial direction of the connecting tube 10 from inside to outside are sequentially a second material layer 104 of woven structure, a second material layer 104 of unidirectional structure with fiber bundles 106 extending along the axial direction of the connecting tube 10, and a first material layer 103 of woven structure, namely the carbon fiber outer layer 105; alternatively, the second material layer 104 adjacent to the carbon fiber outer layer 105 adopts a woven structure, and the weaving direction of the second material layer 104 is different from the weaving direction of the carbon fiber outer layer 105. For example, the angle between the weaving direction of the second material layer 104 and the axial direction of the connecting tube 10 is 30 degrees, and the angle between the weaving direction of the carbon fiber outer layer 105 and the axial direction of the connecting tube 10 is 45 degrees. The remaining second material layers 104 may all adopt woven structures, or all adopt unidirectional structures, or partially adopt woven structures and partially adopt unidirectional structures, wherein the unidirectional structure mainly selects the axial structure, and the ratio of a total layer thickness of the second material layers 104 of axial structure to a total layer thickness of the second material layers 104 is greater than or equal to 80%. For example, as shown in Figure 6, in the radial direction of the connecting tube 10 from inside to outside are sequentially a second material layer 104 of unidirectional structure with fiber bundles 106 extending along the axial direction of the connecting tube 10, a second material layer 104 of unidirectional structure with fiber bundles 106 extending along the axial direction of the connecting tube 10, a second material layer 104 of woven structure, and a first material layer 103 of woven structure, namely the carbon fiber outer layer 105.

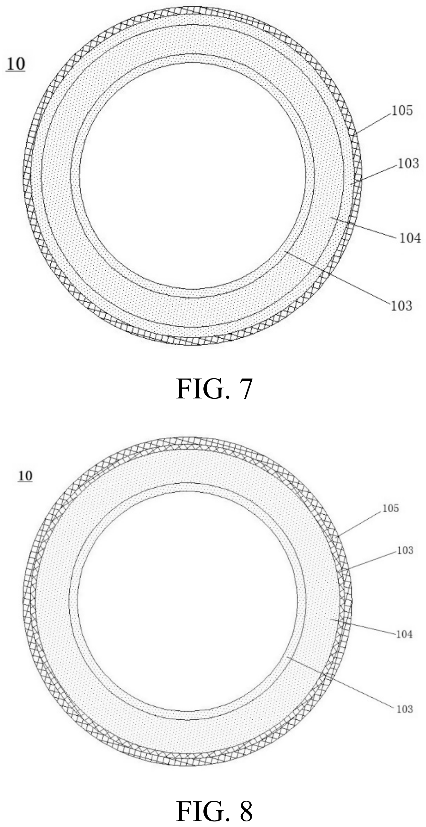

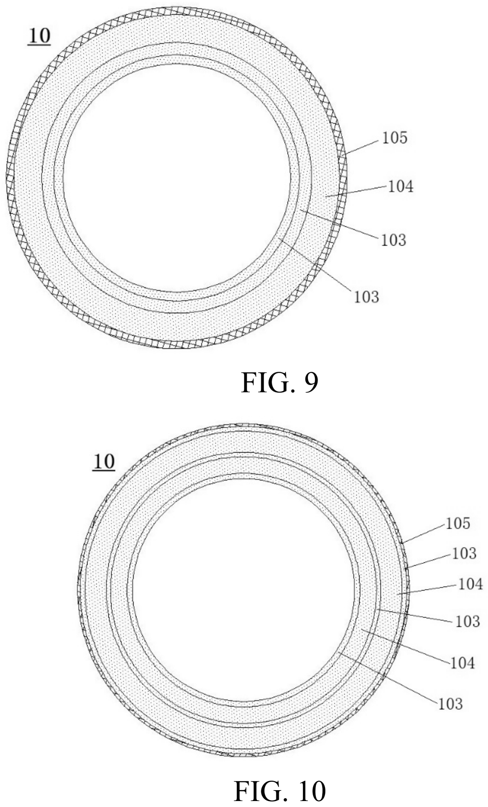

For example, the number of the first material layers 103 is configured as greater than or equal to two layers, the number of the second material layers 104 is configured as one layer, wherein one first material layer 103 forms the carbon fiber outer layer 105 which is the radially outermost layer of the connecting tube 10, and the remaining first material layers 103 are disposed at an inner side of the carbon fiber outer layer 105 in the radial direction of the connecting tube 10 to form carbon fiber inner layers 103. If one of the carbon fiber inner layers 103 is set adjacent to the carbon fiber outer layer 105, the carbon fiber outer layer 105 adopts a woven structure, and the fiber bundle 106 arrangement direction of the woven structure (the arrangement direction is shown in Figure 1) is different from the fiber bundle 106 arrangement direction of the carbon fiber inner layer 103. That is, the carbon fiber inner layer 105 adjacent to the carbon fiber outer layer 105 adopts a unidirectional structure, and regardless of whether the fiber bundles 106 of the unidirectional structure extend along the axial direction, circumferential direction, or spiral direction around the axis of the connecting tube 10, they are all different from the weaving direction of the woven structure of the carbon fiber outer layer 105. The remaining carbon fiber inner layers 103 may all adopt woven structures, or all adopt unidirectional structures, or partially adopt woven structures and partially adopt unidirectional structures, wherein the unidirectional structure mainly selects the axial structure, and the ratio of a total layer thickness of the carbon fiber inner layers 103 adopting the axial structure to a total layer thickness of the carbon fiber inner layers 103 is greater than or equal to 50%. The second material layer 104 with only one layer adopts the axial structure among unidirectional structures. For example, as shown in Figure 7, in the radial direction of the connecting tube 10 from inside to outside are sequentially a first material layer 103 of unidirectional structure with fiber bundles 106 extending along the axial direction of the connecting tube 10, a second material layer 104 of unidirectional structure with fiber bundles 106 extending along the axial direction of the connecting tube 10, a first material layer 103 of unidirectional structure with fiber bundles 106 extending along the axial direction of the connecting tube 10, and a first material layer 103 of woven structure, namely the carbon fiber outer layer 105; alternatively, the carbon fiber inner layer 103 adjacent to the carbon fiber outer layer 105 adopts a woven structure, and the weaving direction of the carbon fiber inner layer 103 is different from the weaving direction of the carbon fiber outer layer 105. For example, the angle between the weaving direction of the carbon fiber inner layer 103 and the axial direction of the connecting tube 10 is 30 degrees, and the angle between the weaving direction of the carbon fiber outer layer 105 and the axial direction of the connecting tube 10 is 45 degrees. The remaining carbon fiber inner layers 103 may all adopt woven structures, or all adopt unidirectional structures, or partially adopt woven structures and partially adopt unidirectional structures, wherein the unidirectional structure mainly selects the axial structure, and the ratio of a total layer thickness of the carbon fiber inner layers 103 adopting the axial structure to a total layer thickness of the carbon fiber inner layers 103 is greater than or equal to 50%. The second material layer 104 with only one layer adopts a unidirectional structure. For example, as shown in Figure 8, in the radial direction of the connecting tube 10 from inside to outside are sequentially a first material layer 103 of unidirectional structure with fiber bundles 106 extending along the axial direction of the connecting tube 10, a second material layer 104 of unidirectional structure with fiber bundles 106 extending along the axial direction of the connecting tube 10, a first material layer 103 of woven structure, and a first material layer 103 of woven structure, namely the carbon fiber outer layer 105. If the second material layer 104 is set adjacent to the carbon fiber outer layer 105, the carbon fiber outer layer 105 adopts a woven structure, the second material layer 104 adopts a unidirectional structure, and the fiber bundles 106 of the unidirectional structure, whether extending along the axial direction, circumferential direction, or spiral direction around the axis of the connecting tube 10, are all different from the weaving direction of the woven structure of the carbon fiber outer layer 105. For example, as shown in Figure 9, in the radial direction of the connecting tube 10 from inside to outside are sequentially a first material layer 103 of unidirectional structure with fiber bundles 106 extending along the axial direction of the connecting tube 10, a first material layer 103 of unidirectional structure with fiber bundles 106 extending along the axial direction of the connecting tube 10, a second material layer 104 of unidirectional structure with fiber bundles 106 extending along the axial direction of the connecting tube 10, and a first material layer 103 of woven structure, namely the carbon fiber outer layer 105.

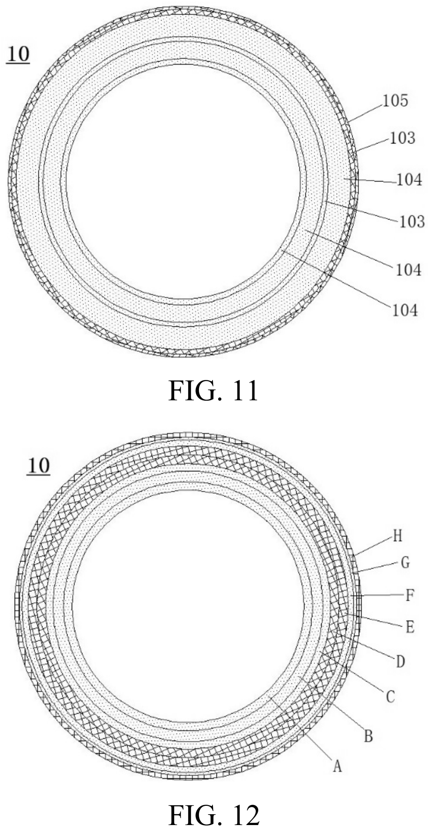

For example, the number of the first material layers 103 is configured as greater than or equal to two layers, the number of the second material layers 104 is configured as greater than or equal to two layers, wherein one first material layer 103 forms the carbon fiber outer layer 105 which is the radially outermost layer of the connecting tube 10, and the remaining first material layers 103 are disposed at an inner side of the carbon fiber outer layer 105 in the radial direction of the connecting tube 10 to form carbon fiber inner layers 103. If one of the carbon fiber inner layers 103 is set adjacent to the carbon fiber outer layer 105, the carbon fiber outer layer 105 adopts a woven structure, and the fiber bundle 106 arrangement direction of the woven structure (the arrangement direction is shown in Figure 1) is different from the fiber bundle 106 arrangement direction of the carbon fiber inner layer 103. That is, the carbon fiber inner layer 103 adjacent to the carbon fiber outer layer 105 adopts a unidirectional structure, and regardless of whether the fiber bundles 106 of the unidirectional structure extend along the axial direction, circumferential direction, or spiral direction around the axis of the connecting tube 10, they are all different from the weaving direction of the woven structure of the carbon fiber outer layer 105. The remaining carbon fiber inner layers 103 may all adopt woven structures, or all adopt unidirectional structures, or partially adopt woven structures and partially adopt unidirectional structures, wherein the unidirectional structure mainly selects the axial structure, and the ratio of a total layer thickness of the carbon fiber inner layers 103 adopting the axial structure to a total layer thickness of the carbon fiber inner layers 103 is greater than or equal to 50%. The second material layers 104 may all adopt unidirectional structures, or partially adopt woven structures and partially adopt unidirectional structures, wherein the unidirectional structure mainly selects the axial structure, and the ratio of a total layer thickness of the second material layers 104 of axial structure to a total layer thickness of the second material layers 104 is greater than or equal to 80%. For example, as shown in Figure 10, in the radial direction of the connecting tube 10 from inside to outside are sequentially a first material layer 103 of unidirectional structure with fiber bundles 106 extending along the axial direction of the connecting tube 10, a second material layer 104 of unidirectional structure with fiber bundles 106 extending along the axial direction of the connecting tube 10, a first material layer 103 of unidirectional structure with fiber bundles 106 extending along the axial direction of the connecting tube 10, a second material layer 104 of unidirectional structure with fiber bundles 106 extending along the axial direction of the connecting tube 10, a first material layer 103 of unidirectional structure with fiber bundles 106 extending along the axial direction of the connecting tube 10, and a first material layer 103 of woven structure, namely the carbon fiber outer layer 105; alternatively, the carbon fiber inner layer 103 adjacent to the carbon fiber outer layer 105 adopts a woven structure, and the weaving direction of the carbon fiber inner layer 103 is different from the weaving direction of the carbon fiber outer layer 105. For example, the angle between the weaving direction of the carbon fiber inner layer 103 and the axial direction of the connecting tube 10 is 30 degrees, and the angle between the weaving direction of the carbon fiber outer layer 105 and the axial direction of the connecting tube 10 is 45 degrees. The remaining carbon fiber inner layers 103 may all adopt woven structures, or all adopt unidirectional structures, or partially adopt woven structures and partially adopt unidirectional structures, wherein the unidirectional structure mainly selects the axial structure, and the ratio of a total layer thickness of the carbon fiber inner layers 103 adopting the axial structure to a total layer thickness of the carbon fiber inner layers 103 is greater than or equal to 50%. The second material layers 104 may all adopt unidirectional structures, or partially adopt woven structures and partially adopt unidirectional structures, wherein the unidirectional structure mainly selects the axial structure, and the ratio of a total layer thickness of the second material layers 104 adopting the axial structure to a total layer thickness of the second material layers 104 is greater than or equal to 80%. For example, as shown in Figure 11, in the radial direction of the connecting tube 10 from inside to outside are sequentially a second material layer 104 of unidirectional structure with fiber bundles 106 extending along the axial direction of the connecting tube 10, a second material layer 104 of unidirectional structure with fiber bundles 106 extending along the axial direction of the connecting tube 10, a first material layer 103 of unidirectional structure with fiber bundles 106 extending along the axial direction of the connecting tube 10, a second material layer 104 of unidirectional structure with fiber bundles 106 extending along the axial direction of the connecting tube 10, a first material layer 103 of woven structure, and a first material layer 103 of woven structure, namely the carbon fiber outer layer 105.

At the same time, under the premise that the wall thickness range of the connecting tube 10 is determined, the layer thickness of each first material layer 103 and each second material layer 104 is further limited to 0.15 mm to 0.25 mm, for example, 0.16 mm, 0.18 mm, 0.20 mm, 0.22 mm, 0.24 mm, etc. Within this range, when the ratio of the total layer thickness of the first material layer 103 and the second material layer 104 remains unchanged, the number of the first material layers 103 or the second material layers 104 can be increased by reducing the layer thickness of individual first material layer 103 or second material layer 104, thereby improving the impact toughness and stiffness of the connecting tube 10.

Such arrangement can ensure high strength of the outermost layer of the connecting tube 10, while reducing the transmission of impact energy in the radial direction of the connecting tube 10. Even when falling and contacting protruding structures on the ground, the carbon fiber outer layer 105 can withstand most of the impact capacity, avoiding as much as possible the impact on the remaining first material layers 103 or second material layers 104 wrapped by the carbon fiber outer layer 105, so that cracks or fractures are generated inside the connecting tube 10.

When the number of both the first material layers 103 and the second material layers 104 is greater than or equal to two layers, the most basic setting principle to follow is that the radially outermost layer of the connecting tube 10 adopts the first material layer 103 to form the carbon fiber outer layer 105, and there are no special requirements for the radial arrangement order of the remaining first material layers 103 and second material layers 104 on the connecting tube 10, only ensuring that the fiber bundle 106 arrangement direction of the carbon fiber outer layer 105 is different from the fiber bundle 106 arrangement direction of its adjacent material layer. For example, all first material layers 103 can be concentrated and arranged on the radially outer side of the connecting tube 10, and all second material layers 104 can be concentrated and arranged on the radially inner side of the connecting tube 10, or along the radial direction of the connecting tube 10 from outside to inside sequentially being the carbon fiber outer layer 105, all second material layers 104 and remaining first material layers 103, or along the radial direction of the connecting tube 10 from outside to inside sequentially being the carbon fiber outer layer 105, second material layers 104 and remaining first material layers 103 arranged alternately at intervals, etc.

Based on the above embodiments, a preferred structure is to arrange all second material layers 104 concentrated together along the radial direction of the connecting tube 10, with the number of second material layers 104 being five layers, wherein two second material layers 104 adopt woven structures, three second material layers 104 adopt unidirectional structures, and the two second material layers 104 adopting woven structures are adjacent in the radial direction of the connecting tube 10, the three second material layers 104 adopting unidirectional structures are adjacent in the radial direction of the connecting tube 10, that is to say, the five second material layers 104 are arranged from outside to inside in the radial direction of the connecting tube 10 as sequentially a second material layer 104 of woven structure, a second material layer 104 of woven structure, a second material layer 104 of unidirectional structure, a second material layer 104 of unidirectional structure, a second material layer 104 of unidirectional structure, or sequentially as a second material layer 104 of unidirectional structure, a second material layer 104 of unidirectional structure, a second material layer 104 of unidirectional structure, a second material layer 104 of woven structure, a second material layer 104 of woven structure. Such arrangement can maximize the improvement of toughness and vibration absorption performance of the connecting tube 10, therefore it is used as the preferred arrangement of the second material layers 104 of the connecting tube provided by the present application.

Further, combining the above embodiments, a preferred structure of the connecting tube 10 as a whole can be obtained, that is, arranging multiple second material layers 104 sequentially from inside to outside in the radial direction of the connecting tube 10 to form five fiber layers A, B, C, D and E, and arranging multiple first material layers 103 sequentially from inside to outside in the radial direction of the connecting tube 10 to form three fiber layers F, G and H, wherein fiber layer H located at the radially outermost layer of the connecting tube 10 adopts a twill woven structure. For example: the second material layer A, the second material layer B, the second material layer C, the second material layer D and the second material layer E all adopt unidirectional structures, and the fiber bundle 106 extension directions all extend along the axial direction of the connecting tube 10. The first material layer G adjacent to the first material layer H, namely carbon fiber outer layer H, may adopt a unidirectional structure, or adopt a woven structure with its weaving direction forming an angle with the axial direction of the connecting tube 10 different from the angle formed between the weaving direction of the carbon fiber outer layer H and the axial direction of the connecting tube 10. The first material layer F may adopt a woven structure or unidirectional structure. Alternatively, among the second material layer A, the second material layer B, the second material layer C, the second material layer D and the second material layer E, some adopt unidirectional structures and some adopt woven structures. Through superposition of unidirectional structures and woven structures in the radial direction of the connecting tube 10, specifically, as shown in Figure 12, the second material layer A, the second material layer B, and the second material layer C may adopt unidirectional structures with fiber bundles 106 extending along the axial direction of the connecting tube 10, the second material layer D and the second material layer E adopt woven structures, the first material layer F and the first material layer G adopt unidirectional structures with fiber bundles 106 extending along the axial direction of the connecting tube 10, and the outermost carbon fiber outer layer H adopts a twill woven structure with the weaving direction having an angle of, for example, 45 degrees with the axial direction of the connecting tube 10.

Specifically, the number of the first material layers 103 is one layer or greater than or equal to two layers, the number of the second material layers 104 is one layer or greater than or equal to two layers, and each fiber layer of the connecting tube 10 includes epoxy resin. During the manufacturing process of the connecting tube 10, each fiber layer is immersed in prepreg containing epoxy resin, which enables the connecting tube 10 to achieve curing smoothly during the forming process, ensuring that each fiber layer can be formed according to the preset structure, so that the mechanical performance of the connecting tube 10 can be more reliably improved. In the present application, the glass transition temperature of the epoxy resin in the connecting tube 10 is 140°C to 210°C. Manufacturing the connecting tube 10 within this temperature range can make the connecting tube 10 have good heat resistance performance, thereby helping to improve the mechanical performance of the connecting tube 10. If the glass transition temperature of the epoxy resin is too high, it will increase the cost of the connecting tube 10; if the glass transition temperature of the epoxy resin is too low, the heat resistance performance of the connecting tube 10 will be poor. Preferably, the glass transition temperature of the epoxy resin is 170°C to 210°C.

The connecting tube 10 provided by the present application can achieve more than 30% weight reduction compared to aluminum tubes in the prior art, and the axial modulus can reach 60 GPa to 90 GPa, so as to have stiffness close to aluminum tubes, and can pass a 1m drop test without bending, with impact resistance performance superior to aluminum tubes. Under the same operating conditions, power tools using the connecting tube 10 have lower tactile vibration and better buffering performance compared to power tools using aluminum tubes.

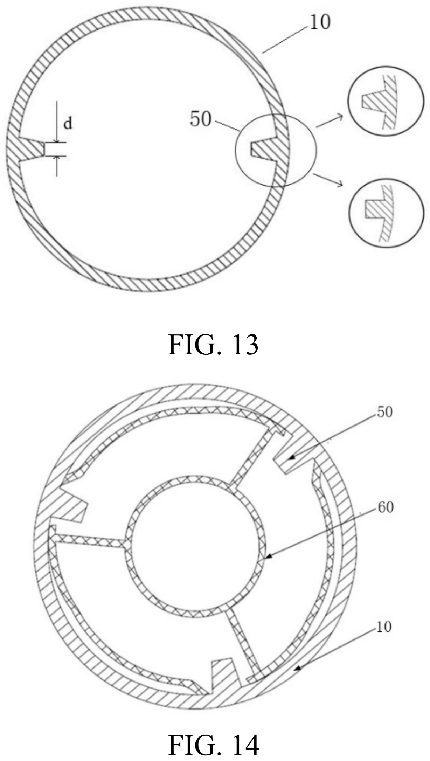

As shown in Figure 13, a limiting structure 50 is protruding from the inner sidewall of the connecting tube 10. In some types of power tools, the working head assembly 20 and the power assembly are respectively disposed at both ends of the connecting tube 10. For example, in a rear-mounted grass trimmer 200, the power assembly driving the working head assembly 20 is disposed at the gripping assembly 40, therefore it is necessary to dispose a transmission structure inside the connecting tube 10. In order to prevent the transmission structure from generating radial vibration in the connecting tube 10, a lining 60 is generally disposed inside the connecting tube 10. To prevent the lining 60 from circumferential rotation inside the connecting tube 10, the limiting structure 50 is disposed on the inner sidewall of the connecting tube 10 and is installed in cooperation with the lining 60. The limiting structure 50 may be a protrusion. As shown in Figure 14, the protrusion is embedded into a slot of the lining 60 to achieve circumferential positioning of the lining 60 inside the connecting tube 10. The protrusion may extend in the axial direction of the connecting tube 10 to become a rib, so as to achieve more sufficient positioning of the lining 60 over the entire axial length of the connecting tube 10. As shown in Figure 13, the cross-sectional shape of the protrusion is trapezoidal or rectangular, and the width d of the protruding end of the protrusion away from the inner sidewall of the connecting tube 10 is less than 10 mm. Meanwhile, multiple protrusions can be disposed at equal intervals in the circumferential direction of the connecting tube 10, for example, 2, 3 or 4, etc. The material of the limiting structure 50 may be the above-mentioned glass fiber or carbon fiber, and its material is not limited to the material of the fiber layer forming the inner sidewall of the connecting tube 10, that is to say, the material of the limiting structure 50 may be the same as or different from the material of the fiber layer of the inner sidewall of the connecting tube 10. Alternatively, the limiting structure 50 may also be a groove opened in the inner sidewall of the connecting tube 10. In addition, the limiting structure 50 may not be disposed on the inner sidewall of the connecting tube 10, and the connecting tube 10 with such structure can meet the working requirements of front-mounted grass trimmers where the motor is disposed at the working head assembly 20.

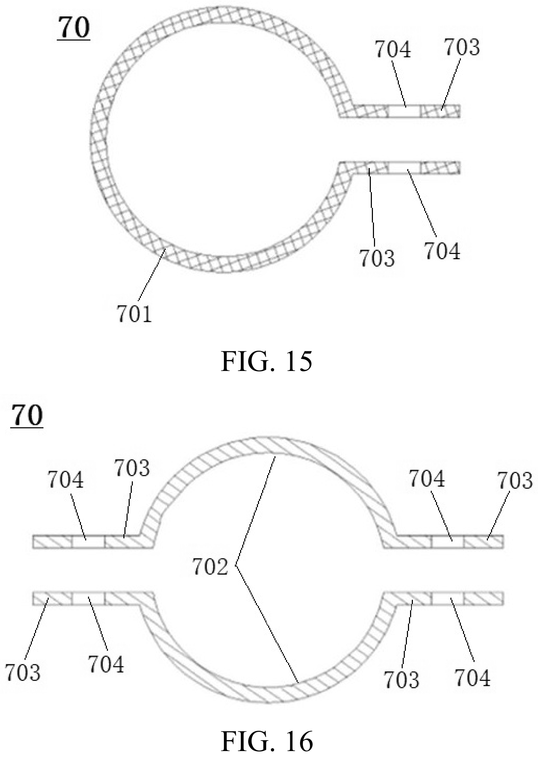

In addition, the connection between the connecting tube 10 and the housing of the gripping assembly 40 generally adopts a clamp 70. As shown in Figures 15 and 16, the clamp 70 includes a C-shaped portion 701 or two U-shaped portions 702, and connecting portions 703 are disposed at the opening of the C-shaped portion 701 or at both sides of the openings of the two U-shaped portions 702. Through holes 704 for screws to pass through are opened on the connecting portions 703. When connecting with the housing of the gripping assembly 40, the connecting tube 10 extends into the housing of the gripping assembly 40, and the clamp 70 is sleeved on the connecting tube 10. Screws passing through the through holes 104 are screwed onto the housing of the gripping assembly 40 to achieve clamping of the connecting tube 10 by the clamp 70 and connection between the clamp 70 and the housing of the gripping assembly 40, thus achieving connection between the connecting tube 10 and the gripping assembly 40. Among them, the inner surface arc length of the C-shaped portion 701 or the two U-shaped portions 702 is 30 mm to 50 mm, its wrapping length of the connecting tube 10 is 15 mm to 90 mm, and the connecting tube 10 achieves firm connection with the gripping assembly 40 through 2 to 6 clamps 70 arranged in its axial direction.

Further, positioning holes (not shown in the figure) or positioning grooves (not shown in the figure) for positioning the clamp 70 are opened on the connecting tube 10. When the structure opened on the connecting tube 10 is a positioning groove, the positioning groove is an annular groove extending along the axial direction of the connecting tube 10, and the width of the positioning groove matches the width of the C-shaped portion 701 or the U-shaped portion 702, so as to achieve more stable connection between the connecting tube 10 and the clamp 70. When the structure opened on the connecting tube 10 is positioning holes, fixing members such as pins or screws pass through the C-shaped portion 701 or the U-shaped portion 702 and are fixedly connected to the positioning holes, so as to achieve more stable connection between the connecting tube 10 and the clamp 70. The diameter of the positioning holes is 5 mm to 8 mm, and multiple positioning holes are disposed in the circumferential direction of the connecting tube 10. Meanwhile, the distance between the positioning hole closest to the end of the connecting tube 10 and the end is not more than 40 mm, so as to further improve connection firmness.

Generally, the total weight (including the weight of the battery pack) of the power tools 100, 200, 300, 400 using the above-mentioned connecting tube 10 is less than or equal to 7 kg. Based on factors such as tool types, corresponding tool usage conditions, and possible safety risks, there are corresponding improvement needs for the weight, impact resistance, and buffering performance of the connecting tube 10. Therefore, the connecting tube 10 provided by the present application has the following characteristics: the ratio of impact energy that the connecting tube 10 can withstand to its wall thickness is greater than or equal to 58 J/mm. Among them, the impact resistance energy E is calculated by E=mgh, where m represents the total mass of the power tool after assembly with the battery pack 30, g represents the gravity coefficient, and h represents the drop height of the complete machine. Compared to aluminum tubes with the same wall thickness, length, and tube diameter and under the same drop scenario, the present connecting tube 10 can withstand greater impact energy.

In order to clearly and intuitively understand the connecting tube 10 provided by the present application, the following specific description takes a front-mounted grass trimmer 100 that meets the above-mentioned complete machine weight requirement, namely a complete machine weight of less than or equal to 7 kg and with the motor disposed at the working head assembly 20, as an example.

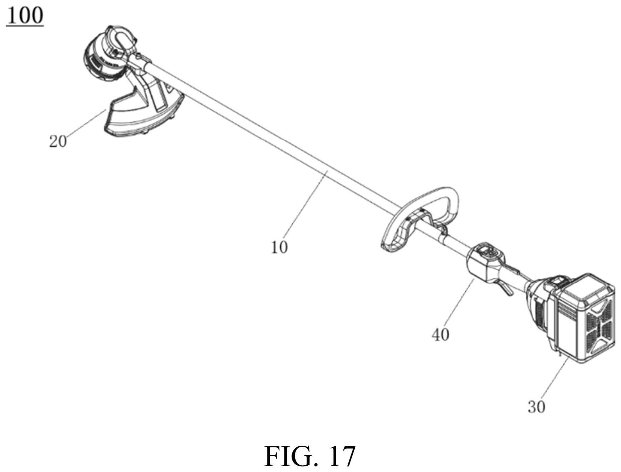

As shown in Figure 17, the front-mounted grass trimmer 100 includes a working head assembly 20, a power assembly, a battery pack 30, and a gripping assembly 40, wherein the working head assembly 20 includes a grass trimming head 201; the power assembly includes a motor that provides driving force for the grass trimming head 201 and a control board that controls motor rotation. The battery pack 30 adopts a lithium battery pack and is installed at one end of the connecting tube 10 located at the gripping assembly 40 in a detachable manner. The gripping assembly 40 is for user gripping and is provided with corresponding operation switches. The connecting tube 10 serves as a connecting component to connect the working head assembly 20 and the gripping assembly 40 of the front-mounted grass trimmer 100. The wall thickness of the connecting tube 10 is set within 1.5 mm to 1.8 mm so that it can directly replace existing aluminum tubes, for example, 1.5 mm, 1.6 mm, 1.7 mm, 1.8 mm, etc. are all acceptable. In the usage scenario of the front-mounted grass trimmer 100, the present connecting tube 10 satisfies that the ratio of the bare machine mass of the power tool, namely the mass after removing the battery pack 30, to the wall thickness of the connecting tube 10 is within the range of 1.5 kg/mm to 1.9 kg/mm. Compared to existing aluminum tubes, under the premise of adopting the same wall thickness, tube diameter, length and the same drop height, the impact resistance equivalent bare machine mass of power tools using the present connecting tube 10 can be heavier, that is, the applicable product range of the present connecting tube 10 is larger. Under the premise of the same bare machine mass and the same drop height, the wall thickness of the present connecting tube 10 can be thinner, achieving better weight reduction effects.

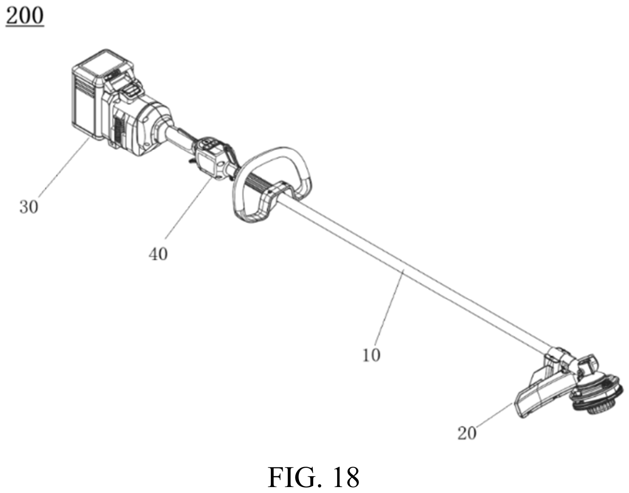

Since the total weight of the front-mounted grass trimmer 100 is less than or equal to 7 kg, compared to other heavy-weight power tools, such as grass trimmers weighing more than 7 kg, as shown in Figure 18, most of such grass trimmers are rear-mounted grass trimmers 200 with motors disposed at the gripping assembly 40. Compared to the relatively balanced weight at both ends of the connecting tube 10 of the front-mounted grass trimmer 100, one end of the connecting tube 10 of the rear-mounted grass trimmer 200 is provided with the gripping assembly 40, power assembly and battery pack 30, while the other end is provided with the working head assembly 20. The weight at both ends of the connecting tube 10 is unbalanced, and the stiffness requirement for the connecting tube 10 is significantly higher than the stiffness requirement for the connecting tube 10 in the front-mounted grass trimmer 100. Since the front-mounted grass trimmer 100 does not require particularly strict stiffness requirements for the connecting tube 10, if all-carbon fiber material is used to make the connecting tube 10, it not only increases costs but also has redundant performance, resulting in low cost-effectiveness. Meanwhile, users experience obvious hand numbness during use, resulting in poor tactile sensation. Therefore, the present connecting tube 10 adds toughening material, namely glass fiber, on the basis of adopting carbon fiber material, so that the connecting tube 10 is at least arranged with carbon fiber layers (i.e., first material layers) 103 and glass fiber layers (i.e., second material layers) 104 in its radial direction. The glass fiber layers 104 mainly enhance toughness and supplement stiffness, while the carbon fiber layers 103 mainly enhance stiffness and supplement toughness, so that the connecting tube 10 has both excellent toughness and stiffness, improving the comprehensive mechanical performance of the connecting tube 10, with lower material costs and higher cost-effectiveness. The addition of tough glass fibers improves the vibration absorption performance of the connecting tube 10, reducing hand numbness during use.

At the same time, the proportion of glass fiber and carbon fiber is also limited, that is, the total layer thickness of glass fiber layers 104 accounts for 50% to 80% of the total wall thickness of the connecting tube 10, correspondingly, the total layer thickness of carbon fiber layers 103 accounts for 20% to 50% of the total wall thickness of the connecting tube 10. By limiting the proportion of the total layer thickness of carbon fiber layers 103 and glass fiber layers 104, the toughness and stiffness of the connecting tube 10 can be better coordinated to meet the requirements for buffering performance and impact resistance performance. To further optimize the comprehensive mechanical performance of the connecting tube 10, it is preferred that the total layer thickness of glass fiber layers 104 accounts for 75% of the total wall thickness of the connecting tube 10, and the total layer thickness of carbon fiber layers 103 accounts for 25% of the total wall thickness of the connecting tube 10. In actual use, the cutting effect of the front-mounted grass trimmer 100 using the present connecting tube 10 can be equivalent to the cutting effect of the front-mounted grass trimmer 100 using aluminum tubes, and the usage effect of the connecting tube 10 is also equivalent to or better than the usage effect of aluminum tubes.

Further, under the premise that the wall thickness range of the connecting tube 10 is 1.5 mm to 2.0 mm and the layer thickness proportion of glass fiber layers 104 and carbon fiber layers 103 is determined, the layer thickness of each carbon fiber layer 103 and each glass fiber layer 104 is further limited within the range of 0.15 mm to 0.25 mm. By selecting appropriate layer thickness to adjust the number of carbon fiber layers 103 and glass fiber layers 104, the connecting tube 10 can have excellent impact resistance performance and buffering performance.

If the front-mounted grass trimmer 100 falls, protruding structures on the ground will first contact the outermost layer of the connecting tube 10 and generate impact force. The impact force will be transmitted radially inward along the connecting tube 10, destroying multiple fiber layers in the radial direction of the connecting tube 10 one by one. Therefore, carbon fiber layer 103 is preferentially selected as the outermost layer of the connecting tube 10, namely the carbon fiber outer layer 105. Since the stiffness of carbon fiber is greater than that of glass fiber, such arrangement can ensure high strength of the outermost layer of the connecting tube 10, reduce collision damage when falling, resist friction during transportation and use, and maintain unaffected performance of the connecting tube 10 under high and low temperature and rainy environments, having good surface appearance performance. At the same time, the fiber arrangement direction of the carbon fiber layer 103 serving as the outermost layer of the connecting tube 10 is set to be different from the fiber arrangement direction of the adjacent carbon fiber layer 103 or glass fiber layer 104, so as to reduce the transmission effect of impact force in the radial direction of the connecting tube 10. The carbon fiber layer 103 serving as the outermost layer of the connecting tube 10 adopts a 3K twill woven structure, therefore the adjacent carbon fiber layer 103 or glass fiber layer 104 can adopt a unidirectional structure or adopt a woven structure with different weaving angles.

Based on the fact that carbon fiber layers 103 and glass fiber layers 104 can choose to use woven structures or unidirectional structures, the carbon fiber layers 103 and glass fiber layers 104 of the connecting tube 10 in this embodiment still mainly adopt the axial structure among unidirectional structures, that is, the ratio of the total layer thickness of glass fiber layers 104 adopting the axial structure to the total layer thickness of glass fiber layers 104 is greater than or equal to 80%. The carbon fiber layer 103 includes one layer forming the carbon fiber outer layer 105 which is the outermost layer of the connecting tube and at least one carbon fiber inner layer 103, wherein the ratio of the total layer thickness of carbon fiber inner layers 103 adopting the axial structure to the total layer thickness of all carbon fiber inner layers 103 is greater than or equal to 50%. Alternatively, the ratio of the total layer thickness of glass fiber layers 104 adopting the axial structure to the total layer thickness of glass fiber layers 104 is greater than or equal to 80%, and the ratio of the total layer thickness of carbon fiber layers 103 adopting the axial structure to the total layer thickness of all carbon fiber layers 103 is greater than or equal to 40%. Such arrangement can enable the connecting tube 10 to have excellent impact resistance performance while ensuring performance consistency at all parts of the connecting tube 10 and continuity of overall strength.

As shown in Figure 12, a relatively preferred structure of the connecting tube 10 is provided for application on the front-mounted grass trimmer 100. Multiple glass fiber layers 104 are arranged sequentially from inside to outside in the radial direction of the connecting tube 10 to form five glass fiber layers 104: A, B, C, D and E. Then multiple carbon fiber layers 103 are sequentially superimposed from inside to outside in the radial direction of the connecting tube 10 on the glass fiber layer E to form three carbon fiber layers 103: F, G and H, wherein the carbon fiber layer H located at the radially outermost layer of the connecting tube 10, namely the carbon fiber outer layer H, adopts a twill woven structure. The glass fiber layer A, the glass fiber layer B, and the glass fiber layer C adopt unidirectional structures with fiber bundles 106 extending along the axial direction of the connecting tube 10. The glass fiber layer D and the glass fiber layer E adopt woven structures. The carbon fiber layer F and the carbon fiber layer G adopt unidirectional structures with fiber bundles 106 extending along the axial direction of the connecting tube 10. The outermost carbon fiber layer H, namely the carbon fiber outer layer H, adopts a twill woven structure with the weaving direction having an angle of, for example, 45 degrees with the axial direction of the connecting tube 10.

In order to verify that the impact resistance performance of the connecting tube 10 provided by the present application is equivalent to or better than that of aluminum tubes, drop tests were conducted on the connecting tube 10 to simulate normal drop situations of the connecting tube 10 during use of the front-mounted grass trimmer 100. Before the drop test, a suitable battery pack 30 is first assembled on the front-mounted grass trimmer 100, then the front-mounted grass trimmer 100 is horizontally raised to 1m above a curb (the curb height from the ground is 15cm to 20cm, curb width is 15cm) and released, allowing the front-mounted grass trimmer 100 to fall freely. The curb impacts the weakest position of the connecting tube 10, namely the axial center. The drop test requirement is that there shall be no cracks at the impacted position of the connecting tube 10. Additionally, by observing whether the connecting tube 10 and aluminum tube bend after completing the drop test, the impact resistance performance of the connecting tube 10 and aluminum tube is further compared. Further, to reduce the safety risk of the front-mounted grass trimmer 100 using the connecting tube 10, a blade edge test is also added to simulate the extreme situation where sharp blades impact the connecting tube 10 after the front-mounted grass trimmer 100 drops. Before the blade edge test, a suitable battery pack 30 is first assembled on the front-mounted grass trimmer 100, then the front-mounted grass trimmer 100 is horizontally raised to 1m above the blade and released. The blade edge impacts the weakest position of the connecting tube 10, namely the axial center. The blade edge test requirement is that there shall be no cracks at the impacted position of the connecting tube 10, or any cracks produced shall have a width less than 10mm in the axial direction of the connecting tube 10, and after 1000 pile hammering impacts at the crack location, the crack width shall not expand. For clearer comparison, Table 1 below shows the test results of front-mounted grass trimmers using connecting tubes within the above specification parameter ranges, front-mounted grass trimmers not using connecting tubes within the above specification parameter ranges, and front-mounted grass trimmers with existing aluminum tubes of the same specifications.

**Table 1**

| | **Total machine mass** | **Tube wall thickness** | **Glass fiber content** | **Glass fiber unidirectional structure proportion** | **Carbon fiber content** | **Carbon fiber unidirectional structure proportion** | **1m drop test** | **Whether bent** | **Blade edge test** |
|---|---|---|---|---|---|---|---|---|---|
| Grass trimmer 1 | 5.9 kg | | 37.50% | 100.00% | 62.50% | 75.00% | Pass | Not bent | Fail |
| Grass trimmer 2 | 5.9 kg | | 50.00% | 100.00% | 50.00% | 66.70% | Pass | Not bent | Fail |
| Grass trimmer 3 | 5.9 kg | 1.5mm | 62.50% | 60.00% | 37.50% | 50.00% | Pass | Not bent | Fail |
| Grass trimmer 4 | 5.9 kg | | 77.80% | 85.70% | 22.20% | 100.00% | Pass | Not bent | Pass |
| Existing grass trimmer | 6.1 kg | | 0.00% | 0.00% | 0.00% | 0.00% | Pass | Bent | Pass |

Through comparison, it can be seen that under the premise that the connecting tube 10 provided by the present application has the same length and wall thickness as aluminum tubes, the mass of the front-mounted grass trimmer 100 using the connecting tube 10 is significantly smaller than the total machine mass of grass trimmers using aluminum tubes. Both the connecting tube 10 provided by the present application and existing aluminum tubes can pass the 1m drop test and blade edge test, that is, the impact resistance performance of the connecting tube 10 of the present application is equivalent to that of aluminum tubes. Further, by comparing the bending conditions of the connecting tube 10 of the present application and aluminum tubes after passing the 1m drop test, it can be seen that the impact resistance performance of the connecting tube 10 of the present application is superior to that of aluminum tubes.

In some other power tools using connecting assemblies, such as pole saws 300 with a bare machine mass of 4.2 kg to 5.0 kg, one end of the connecting assembly is provided with the working head assembly 20, and another end is provided with the battery pack 30, power assembly and gripping assembly 40, wherein the connecting assembly comprises a telescopic tube 10 and a handle tube 80, and the handle tube 80 is connected to the gripping assembly 40. The working head assembly 20 at least includes a housing, a guide bar 202, a saw chain, etc., wherein part of the guide bar 202 is disposed in the housing, and during cutting, the saw chain slides at high speed on the guide bar 202. The gripping assembly 40 usually includes a main handle and an auxiliary handle, wherein control switches and other control buttons are generally provided at the main handle for users to operate the machine. The telescopic tube 10 includes an inner tube 101 and an outer tube 102. The inner tube 101 is at least partially coaxially sliding nested in the outer tube 102 and one end thereof is connected to the working head assembly 20. A locking member 90 is further disposed between the inner tube 101 and the outer tube 102 to maintain relative fixation therebetween. The outer tube 102 is disposed between the inner tube 101 and the handle tube 80. The transmission structure of the power assembly is disposed in the inner tube 101 and the outer tube 102 and is drivingly connected to the working head assembly 20 at the front end.

When the pole saw 300 trims branches, the inner tube 101 is extended to an appropriate length relative to the outer tube 102 and then maintained relatively fixed through the locking member 90. The user holds the main handle and the auxiliary handle with both hands respectively, and raises the working head assembly 20 connected to the front end of the inner tube 101 to an appropriate height to hang and press against the branches that need to be trimmed. Pulling the gripping assembly 40 to make the connecting assembly move back and forth can enable the working head assembly 20 located at the front end of the inner tube 101 to complete precise sawing operations on branches. Generally, the overall length of the telescopic tube 10 of the pole saw 300 can reach more than 3m. In addition, after the inner tube 101 is connected to the working head assembly 20, the distance from the working head assembly 20 to the user's gripping force point is relatively long. To prevent the inner tube 101 from bending and deforming so that users can accurately raise the working head assembly 20 to the designated position, between the stiffness and toughness of the inner tube 101, priority is given to making it have stronger stiffness to improve bending resistance performance. Once a drop occurs, the working head assembly 20 falls in an arc with the user's gripping end as the center and the length of the telescopic tube 10 or the sum of the lengths of the telescopic tube 10 and handle tube 80 as the radius. Protruding structures on the ground are highly likely to directly impact the inner tube 101, while the outer tube 102 is closer to the user's gripping position and has a lower probability of being impacted. Therefore, the impact resistance performance requirements for the inner tube 101 need to be higher than those for the outer tube 102, while the outer tube 102 is closer to the user's gripping position, so the buffering performance requirements for the outer tube 102 need to be higher than those for the inner tube 101. Based on the different performance requirements for the inner tube 101 and outer tube 102, the connecting tube provided by the above embodiment can be configured as the outer tube 102 in the pole saw 300 that meets weight requirements, while the inner tube 101 needs to use a connecting tube with stronger stiffness.

For this purpose, the present application also provides a power tool having an outer tube 102 with light weight, impact resistance performance and buffering performance that meet requirements and low cost, and an inner tube 101 with light weight, impact resistance performance and bending resistance performance that meet requirements. For ease of understanding, a pole saw 300 is taken as an example for detailed description.

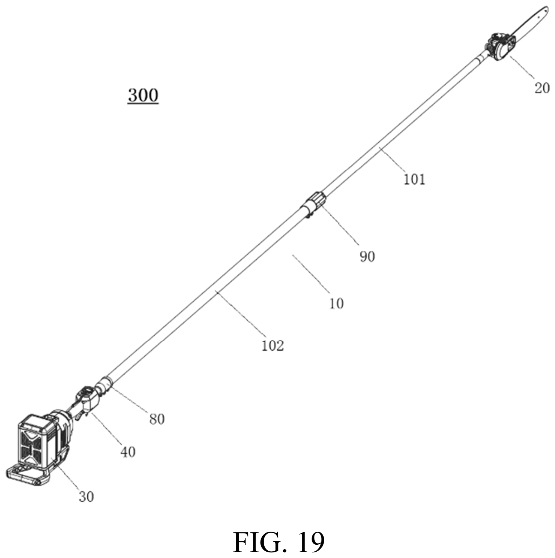

As shown in Figure 19, a power tool, the power tool is a pole saw 300, the pole saw 300 comprises a working head assembly 20, a power assembly, a battery pack 30, a gripping assembly 40 and a connecting assembly, wherein the working head assembly 20 at least includes a housing, a guide bar 202, a saw chain, etc., wherein part of the guide bar 202 is disposed in the housing, and during cutting, the saw chain slides at high speed on the guide bar 200 to cut branches. One end of the connecting assembly is provided with the working head assembly 20, another end thereof is provided with the battery pack 30, power assembly and gripping assembly 40. The bare machine mass of such pole saw 300, namely the weight after removing the battery pack 30, is generally 4.2 kg to 5.0 kg.

Among them, the gripping assembly 40 usually includes a main handle and an auxiliary handle, wherein control switches and other control buttons are generally provided at the main handle for users to operate the machine. The connecting assembly comprises a telescopic tube 10 and a handle tube 80, and the handle tube 80 is connected to the gripping assembly 40. The telescopic tube 10 comprises an inner tube 101 and an outer tube 102. The inner tube 101 is at least partially coaxially sliding nested in the outer tube 102 and one end thereof is connected to the working head assembly 20. A locking member 90 is further disposed between the inner tube 101 and the outer tube 102 to maintain relative fixation therebetween. The outer tube 102 is disposed between the inner tube 101 and the handle tube 80. The handle tube 80 is the same as the handle tube 80 in existing pole saws 300 and adopts a metal tube.

The transmission structure of the power assembly is disposed in the inner tube 101 and the outer tube 102 and is drivingly connected to the working head assembly 20 at the front end. A lining 60 is disposed between the inner sidewall of the inner tube 101 and outer tube 102 and the transmission structure to reduce radial vibration of the transmission structure. At the same time, limiting structures 50 are protruding from the inner sidewalls of the inner tube 101 and outer tube 102 and are installed in cooperation with the lining 60 inside the tubes to further restrict the lining 60 from circumferential rotation inside the tubes along the inner tube 101 or outer tube 102. The limiting structure 50 may be a rib extending along the axial direction of the inner tube 101 or outer tube 102, a single protrusion, or a groove. One limiting structure 50 may be provided in the circumferential direction of the inner sidewalls of the inner tube 101 and outer tube 102, or multiple limiting structures 50 may be provided at equal intervals, for example, 2, 3 or 4, etc. The material of the limiting structure 50 may be the same as or different from the material forming the inner sidewalls of the inner tube 101 or outer tube 102.

Since the working height of the working head assembly 20 of the pole saw 300 is relatively high, the inner tube 101 must not only ensure that it does not bend and deform after being connected to the working head assembly 20, but also ensure that the inner tube 101 can withstand the impact of protruding structures on the ground after falling, with the tube body not breaking and no cracks appearing on the tube body surface. The impact resistance performance requirements for the inner tube 101 need to be significantly higher than those for the outer tube 102, and better bending resistance performance is also needed. The outer tube 102 is closer to the user's gripping end relative to the inner tube 101. When falling occurs, the probability of the outer tube 102 being impacted by protruding structures on the ground is smaller than that of the inner tube 101. Since it is closer to the user's gripping end, it needs to have good vibration absorption performance to reduce the transmission of vibrations generated during tool cutting to the user's gripping location, giving users better gripping feel.

Based on this, the structure of the telescopic tube 10 applied to the pole saw 300 provided by the present application, namely the inner tube 101 and outer tube 102, is as follows: the inner tube 101 is at least arranged with carbon fiber layers 103 made of carbon fiber material in its radial direction, the outer tube 102 is at least arranged with carbon fiber layers 103 made of carbon fiber material in its radial direction, wherein the ratio of the total layer thickness of carbon fiber layers 103 in the inner tube 101 to the total wall thickness of the inner tube 101 is greater than the ratio of the total layer thickness of carbon fiber layers 103 in the outer tube 102 to the total wall thickness of the outer tube 102, thereby achieving that the stiffness of the inner tube 101 is greater than the stiffness of the outer tube 102.

Subsequently, priority is given to setting the ratio of the total layer thickness of carbon fiber layers 103 in the inner tube 101 to the total wall thickness of the inner tube 101 to 100%, that is, the inner tube 101 is made of all-carbon fiber material. On one hand, this achieves the purpose of lightweight design; on the other hand, it can also meet the stiffness performance requirements of the inner tube 101. In addition, the wall thickness of the inner tube 101 is set within 1.6 mm to 2.3 mm, for example, 1.7 mm, 1.8 mm, 1.9 mm, 2.0 mm, 2.1 mm, 2.2 mm, etc. are all acceptable. Such setting makes its wall thickness similar to or the same as that of inner tubes in existing metal telescopic tubes, so that it can be directly replaced for use.

When falling occurs, protruding structures on the ground first impact the outer sidewall of the inner tube 101, and then the impact energy is transmitted radially inward to the interior of the inner tube 101. In this way, to further reduce the transmission effect of impact energy in the radial direction of the inner tube 101, the carbon fiber layer 103 located at the radially outermost layer of the inner tube 101 is specifically formed into a carbon fiber outer layer 105. The carbon fiber outer layer 105 adopts a woven structure formed by multiple fiber bundles 106 and has a different fiber bundles 106 arrangement direction from the adjacent carbon fiber layer 103. The remaining carbon fiber layers 103 adopt unidirectional structures formed by multiple fiber bundles 106. Such arrangement can make the mechanical performance of the carbon fiber outer layer 105 adopting the woven structure and the carbon fiber layers 103 adopting the unidirectional structure more outstanding.

Further, in the forming process of the above woven structure, multiple parallel fiber filaments are gathered into fiber bundles 106, then half of all fiber bundles 106 extend along a first direction, and the remaining half extend along a second direction. There is a certain angle between the first direction and the second direction, such as 60 degrees, 90 degrees or 120 degrees, etc., and then the fiber bundles 106 along the first direction and the fiber bundles 106 along the second direction cross-extend with each other to form a woven structure (this process is similar to the weaving process of cloth), that is, the fiber bundles 106 in the first direction and the fiber bundles 106 in the second direction are cross-woven. Through such arrangement, the fiber bundles 106 of the carbon fiber outer layer 105 located at the radially outermost layer of the inner tube 101 can extend and connect along different directions (i.e., the first direction and the second direction), improving the stiffness and impact resistance performance of the carbon fiber outer layer 105.

As shown in Figure 1, the weaving direction in the above woven structure refers to the respective extending directions of two mutually crossing fiber bundles 106, and the bisector of angle b between these two fiber bundles 106 extends along the axial direction of the inner tube 101, that is to say, the angles c between these two fiber bundles 106 and the axis of the inner tube 101 are the same and are half of the angle b between these two fiber bundles 106. In this way, by making the bisector of the angle between the first direction and the second direction parallel to the axial direction of the inner tube 101, the formed woven structure can be made into a symmetrical structure. When the inner tube 101 is subjected to impact perpendicular to the axial direction (i.e., radial direction), the symmetrical structure can further enhance the impact resistance performance of the inner tube 101, therefore it is preferred to set the woven structure symmetrically about the axial direction.

The above unidirectional structure includes an axial structure and a circumferential structure, wherein the extension direction of fiber bundles 106 in the axial structure is the same as the axial direction of the inner tube 101 (the extension direction of fiber bundles 106 in this case is shown in Figure 2), that is, the axial fiber bundles 106 forming the axial structure extend and are arranged along the axial direction of the inner tube 101. The extension direction of fiber bundles 106 in the circumferential structure is the same as the circumferential direction of the inner tube 101, that is, the fiber bundles 106 forming the circumferential structure are perpendicular to the axis of the inner tube 101 in the horizontal plane. In the inner tube 101 of this embodiment, the ratio of the total layer thickness of carbon fiber layers 103 adopting the axial structure to the total layer thickness of carbon fiber layers 103 adopting the circumferential structure is 3:2, that is, the total layer thickness of carbon fiber layers 103 adopting the axial structure accounts for 60% of the total layer thickness of carbon fiber layers 103 adopting unidirectional structures, and the total layer thickness of carbon fiber layers 103 adopting the circumferential structure accounts for 40% of the total layer thickness of carbon fiber layers 103 adopting unidirectional structures. Such arrangement, on one hand, enables the carbon fiber inner layers 103 using unidirectional structures in the inner tube 101 to ensure stiffness consistency while also reducing the transmission effect of impact energy in the radial direction of the inner tube 101.

For the outer tube 102, under the premise of meeting stiffness requirements, it also needs to have better vibration absorption performance compared to the inner tube 101. The outer tube 102 can use the connecting tube structure in the embodiment of the above-mentioned front-mounted grass trimmer 100. The outer tube 102 is further arranged with one layer or at least two layers of glass fiber layers 104 made of glass fiber material in its radial direction. A preferred structure can be seen in Figure 12. Glass fiber has good toughness and certain stiffness, which can significantly improve the toughness of the entire outer tube 102. Carbon fiber has high stiffness and certain toughness, which can ensure the stiffness of the entire outer tube 102, enabling the outer tube 102 to better meet working requirements such as connection, support, and force bearing. Such arrangement, through making the glass fiber layers 104 mainly enhance toughness and supplement stiffness, while making the carbon fiber layers 103 mainly enhance stiffness and supplement toughness, enables the outer tube 102 to have both excellent toughness and stiffness, allowing the outer tube 102 to meet actual usage requirements.

At the same time, the proportion of glass fiber and carbon fiber is limited, that is, the total layer thickness of glass fiber layers 104 accounts for 50% to 80% of the total wall thickness of the outer tube 102, correspondingly, the total layer thickness of carbon fiber layers 103 accounts for 20% to 50% of the total wall thickness of the outer tube 102. Under the premise that the wall thickness of the outer tube 102 is constant, if the total layer thickness of carbon fiber layers 103 is too large, it correspondingly means that the total layer thickness of glass fiber layers 103 is too small, which will make the stiffness of the outer tube 102 meet requirements but the overall toughness will be poor; if the total layer thickness of carbon fiber layers 103 is too small, it correspondingly means that the total layer thickness of glass fiber layers 104 is too large, which will make the toughness of the outer tube 101 meet requirements but the overall stiffness will be low. Therefore, by limiting the proportion of the total layer thickness of carbon fiber layers 103 and glass fiber layers 104, the toughness and stiffness of the outer tube 102 can be better coordinated to meet the requirements for buffering performance and impact resistance performance, further optimizing the comprehensive mechanical performance of the outer tube 102, having good vibration absorption characteristics during use, and excellent buffering performance. It is preferred that the total layer thickness of glass fiber layers 104 accounts for 75% of the total wall thickness of the outer tube 102, and the total layer thickness of carbon fiber layers 103 accounts for 25% of the total wall thickness of the outer tube 102.

Same as the above inner tube 101, priority is given to making the outermost layer of the outer tube 102 in its radial direction a carbon fiber outer layer 105 formed by carbon fiber layers 103, and the carbon fiber outer layer 105 adopts a woven structure to resist the impact that protruding structures on the ground may have on the outer sidewall of the outer tube 102 when falling. Secondly, the fiber bundles 106 arrangement direction of the carbon fiber outer layer 105 is set to be different from that of its adjacent material layer, thereby reducing the transmission effect of impact energy in the radial direction of the outer tube 102. Alternatively, it can also be considered to make the outermost layer of the outer tube 102 in its radial direction a carbon fiber outer layer 105 formed by carbon fiber layers 103, and the weaving direction of the carbon fiber outer layer 105 is set to be different from the fiber bundles 106 arrangement direction of its adjacent material layer, wherein the carbon fiber layers 103 include axial fiber bundles extending and arranged along the axial direction of the outer tube 102, and the ratio of the total thickness of the axial fiber bundles in the radial direction of the outer tube 102 to the total layer thickness of the carbon fiber layers 103 is greater than or equal to 40%, which can also meet the usage requirements of the outer tube 102.

Specifically, during the forming process of the woven structure of the carbon fiber outer layer 105, multiple parallel fiber filaments are gathered into fiber bundles 106, then half of all fiber bundles 106 extend along a first direction, and the remaining half extend along a second direction. There is a certain angle between the first direction and the second direction, such as 60 degrees, 90 degrees or 120 degrees, etc., and then the fiber bundles 106 along the first direction and the fiber bundles 106 along the second direction cross-extend with each other to form a woven structure (this process is similar to the weaving process of cloth), that is, the fiber bundles 106 in the first direction and the fiber bundles 106 in the second direction are cross-woven. Through such arrangement, the fiber bundles 106 of the carbon fiber outer layer 105 located at the radially outermost layer of the outer tube 102 can extend and connect along different directions (i.e., the first direction and the second direction), improving the stiffness and impact resistance performance of the carbon fiber outer layer 105.

As shown in FIG. 1, a weaving direction in the woven structure refers to respective extending directions of two mutually crossing fiber bundles 106, and a bisector of an angle b between the two fiber bundles 106 extends along an axial direction of the outer tube 102, that is to say, a size of an angle c between the two fiber bundles 106 and an axis of the outer tube 102 is the same and is one-half of the angle b between the two fiber bundles 106. In this way, by making the bisector of an angle of the first direction and the second direction parallel to the axial direction of the outer tube 102, a formed woven structure can be made into a symmetrical structure, when the outer tube 102 is subjected to an impact perpendicular to the axial direction (i.e., a radial direction), the symmetrical structure can further enhance the impact resistance performance of the outer tube 102, therefore it is preferred to set the woven structure symmetrically about the axial direction.

Secondly, the carbon fiber outer layer 105 adopts a 3K twill woven structure, a weaving direction of a material layer adjacent thereto is set to be different from the weaving direction of the carbon fiber outer layer 105. For example, the carbon fiber layer 103 or the glass fiber layer 104 adjacent thereto adopts a unidirectional structure, and regardless of whether fiber bundles 106 of the unidirectional structure extend along the axial direction, a circumferential direction, or a spiral direction around an axis of the outer tube 102, all are different from the weaving direction of the woven structure of the carbon fiber outer layer 105. Alternatively, the carbon fiber layer 103 or the glass fiber layer 104 adjacent thereto adopts a woven structure, but the weaving direction of the woven structure is different from the weaving direction of the carbon fiber outer layer 105, for example, an angle between the weaving direction of the carbon fiber layer 103 or the glass fiber layer 104 adjacent to the carbon fiber outer layer 105 and the axial direction of the outer tube 102 is 40 degrees, an angle between the weaving direction of the carbon fiber outer layer 105 and the axial direction of the outer tube 102 is 60 degrees. Such setting can reduce an impact energy transmission effect in the radial direction of the outer tube 102. Remaining carbon fiber layers 103, i.e., carbon fiber inner layers 103, may all adopt a unidirectional structure, or partially adopt a unidirectional structure and partially adopt a woven structure, wherein the unidirectional structure mainly adopts an axial structure in which fiber bundles 106 extend and are arranged along the axial direction of the outer tube 102, a ratio of a total layer thickness of the carbon fiber inner layers 103 adopting the axial structure to a total layer thickness of the carbon fiber inner layers 103 is greater than or equal to 60%, such setting is to ensure a continuity of an overall strength of the outer tube 102. Similarly, the glass fiber layer 104 may all adopt a woven structure, or all adopt a unidirectional structure, or partially adopt a woven structure and partially adopt a unidirectional structure, wherein the unidirectional structure mainly selects to adopt the axial structure in which fiber bundles 106 extend and are arranged along the axial direction of the outer tube 102, a ratio of a total layer thickness of the glass fiber layer 104 of the axial structure to a total layer thickness of the glass fiber layer 104 is greater than or equal to 80%, making the outer tube 102 have good toughness and vibration absorption performance.

In order to verify that an impact resistance performance of the telescopic tube 10 provided by the present application is equivalent to or better than that of an aluminum tube, a toppling test was conducted on the telescopic tube 10, to simulate a conventional toppling situation of the telescopic tube 10 during a use process of the pole saw 300. Before the toppling test, a suitable battery pack 30 is first assembled on the pole saw 300, the inner tube 101 is pulled out from the outer tube 102 and locked by a locking member 90 to maintain relative fixation therebetween, a front end of the inner tube 101 is connected to the working head assembly 20. Then, both hands hold a main handle and an auxiliary handle and raise the telescopic tube 10 at a 60° angle relative to a ground, making the working head assembly 20 at the front end of the inner tube 101 be 4m high from a curb (a curb height from the ground is 15cm to 20cm, a curb width is 15cm) and released, making the working head assembly 20 fall naturally, the curb impacts a weakest position of the inner tube 101, i.e., an axial center, a requirement for passing the toppling test is that the impacted position of the inner tube 101 must not have cracks, in addition, by observing whether the inner tube 101 and the aluminum tube bend after completing the toppling test, to further compare the impact resistance performance of the inner tube 101 and the aluminum tube. Further, in order to reduce a safety risk of the pole saw 300 using the telescopic tube 10, a blade edge test is also added to simulate an extreme situation where a sharp blade edge impacts the inner tube 101 after the pole saw 300 topples. Before the blade edge test, a suitable battery pack 30 is first assembled on the pole saw 300, the inner tube 101 is pulled out from the outer tube 102 and locked by the locking member 90 to maintain relative fixation therebetween, the front end of the inner tube 101 is assembled with the working head assembly 20. Thereafter, one end of the pole saw 300 provided with the gripping assembly 40, the battery pack 30 and the power assembly is placed on the ground, thereafter a hand grips the inner tube 101 and lifts the working head assembly 20 to 1.5m high above a blade and releases, a blade edge of the blade impacts the weakest position of the inner tube 101, i.e., the axial center, a requirement for passing the blade edge test is, the impacted position of the inner tube 101 must not have cracks or a width of produced cracks in the axial direction of the inner tube 101 is less than 8mm and after performing 1000 pile hammering tests on a crack location, a crack width does not expand. For a clearer comparison, Table 2 below shows test situations of pole saws using inner tubes within the specification parameter range, pole saws not using inner tubes within the specification parameter, and pole saws with existing aluminum tubes of a same specification.

**Table 2**

| | **Total machine mass** | **Inner tube wall thickness** | **Inner tube carbon fiber content** | **Outer tube wall thickness** | **Outer tube carbon fiber content** | **4m toppling test** | **Whether bent** | **Blade edge test** |
|---|---|---|---|---|---|---|---|---|
| Pole saw 1 | 8.8 kg | 1.4 mm | 37.50% | | | Fail | × | Fail |
| Pole saw 2 | 8.8 kg | 1.65 mm | 90.00% | 1.5 mm | 37.50% | Fail | × | Fail |
| Pole saw 3 | 8.8 kg | 1.45 mm | 100.00% | | | Fail | × | Fail |
| Pole saw 4 | 8.8 kg | 1.6 mm | 100.00% | | | Pass | Not bent | Pass |
| Existing pole saw | 9.2 kg | 1.4 mm | 0.00% | | 0.00% | Pass | Bent | Pass |

Through comparison, it can be known that a total machine weight of the pole saw 300 using the telescopic tube 10 provided by the present application is smaller than a total machine weight of the pole saw using an existing aluminum telescopic tube, on a premise that the telescopic tube 10 provided by the present application and the aluminum telescopic tube adopt a same length and outer tube wall thickness, the inner tube 101 of the telescopic tube 10 of the present application and an inner tube of the aluminum telescopic tube both can pass the 4m toppling test and the blade edge test, that is, the impact resistance performance of the inner tube 101 in the telescopic tube 10 of the present application is equivalent to that of the inner tube of the aluminum telescopic tube. Further, by comparing a bending situation of the inner tube 101 of the telescopic tube 10 of the present application and the inner tube of the aluminum telescopic tube after passing the 4m toppling test, it can be known that the impact resistance performance of the inner tube 101 of the telescopic tube 10 of the present application is more superior to the impact resistance performance of the inner tube of the aluminum telescopic tube.

The telescopic tube 10 provided by the present application, relative to the aluminum telescopic tube in the prior art, can reduce weight by more than 30%, and an axial modulus of the inner tube 101 thereof can reach 90 GPa to 120 GPa, so as to have a stiffness close to the aluminum tube, and an impact resistance performance thereof can pass the 4m toppling test and not bend, the impact resistance performance is superior to the aluminum tube. Under a same use condition, the pole saw 300 using the telescopic tube 10 has a lower use hand feel vibration compared to the pole saw using the aluminum telescopic tube, a buffering performance is better.

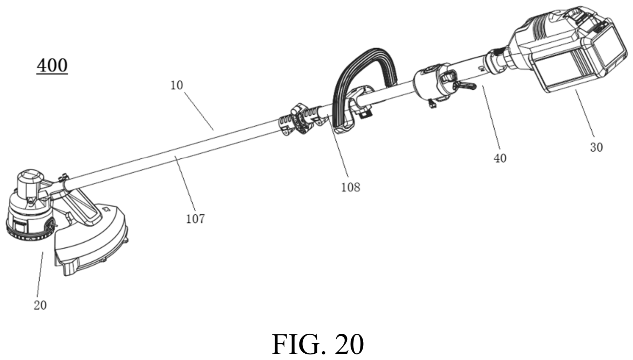

Further, in some power tools that can use multiple working head assemblies, referring to FIG. 20, the power tool 400 is a grass trimmer or a pole saw adopting a split connecting tube, the connecting tube 10 comprises a first connecting tube 107 and a second connecting tube 108, wherein the first connecting tube 107 is connected to a front working head assembly 20, the second connecting tube 108 is connected to common components such as the gripping assembly 40, the battery pack 30, etc., connection through the first connecting tube 107 and the second connecting tube 108 is to connect different working head assemblies 20 with rear common components. The split connecting tube 10 of this type of power tool 400 also has a use demand for lightweight, having good impact resistance performance and buffering performance, the first connecting tube 107 and the second connecting tube 108 may adopt a following configuration, the first connecting tube 107 adopts a same configuration as the connecting tube 10 in the front-mounted grass trimmer 100 embodiment or a same configuration as the outer tube 101 in the pole saw 300 embodiment, the second connecting tube 108 adopts a same configuration as the inner tube 101 in the pole saw 300 or adopts a metal tube in the prior art; alternatively, the first connecting tube 107 adopts a same configuration as the inner tube 101 in the pole saw 300 or adopts a metal tube in the prior art, the second connecting tube 108 adopts may adopt a same configuration as the connecting tube 10 in the front-mounted grass trimmer 100 embodiment or the outer tube 102 in the pole saw 300 embodiment; or the first connecting tube 107 and the second connecting tube 108 both adopt a same configuration as the connecting tube 10 in the front-mounted grass trimmer 100, a specific configuration solution and an achieved technical effect are same as in the front-mounted grass trimmer 100 or pole saw 300 embodiment, details are not repeated here.

The above description of the disclosed embodiments enables a person skilled in the art to implement or use the present application. Multiple modifications to these embodiments will be obvious to a person skilled in the art, a general principle defined herein may be implemented in other embodiments without departing from a spirit or scope of the present application. Therefore, the present application will not be limited to these embodiments shown herein, but is to be accorded the widest scope consistent with a principle and novel feature disclosed herein.

## Claims

1. A power tool, the power tool comprising:
a working head assembly (20), the working head assembly (20) comprising a working head (201) for operation;
a power assembly, the power assembly driving the working head (201);
a battery pack (30), the battery pack (30) supplying power to the power assembly;
a gripping assembly (40) for user gripping;
a connecting tube (10) disposed between the working head assembly (20) and the gripping assembly (40), wherein
the connecting tube (10) is at least arranged with a first material layer (103) made of carbon fiber material and a second material layer (104) made of non-carbon fiber material, the stiffness of the second material layer (104) is smaller than the stiffness of the first material layer (103), and the toughness of the second material layer (104) is greater than the toughness of the first material layer (103).

2. The power tool according to claim 1, wherein: a total layer thickness of the second material layer (104) accounts for 50% to 80% of a total wall thickness of the connecting tube (10).

3. The power tool according to claim 2, wherein the second material layer (104) is a glass fiber layer.

4. The power tool according to claim 2, wherein the second material layer (104) comprises axial fiber bundles extending and arranged along an axial direction of the connecting tube (10), and a ratio of a total thickness of the axial fiber bundles in a radial direction of the connecting tube (10) to the total layer thickness of the second material layer (104) is greater than or equal to 80%.

5. The power tool according to claim 2, wherein an outermost layer of the connecting tube (10) in a radial direction thereof is a carbon fiber outer layer (105) formed by the first material layer (103).

6. The power tool according to claim 5, wherein a fiber arrangement direction of the carbon fiber outer layer (105) is different from a fiber arrangement direction of an adjacent material layer.

7. The power tool according to claim 5 or 6, wherein the first material layer (103) comprises axial fiber bundles extending and arranged along the axial direction of the connecting tube (10), and a ratio of a total thickness of the axial fiber bundles in the radial direction of the connecting tube (10) to a total layer thickness of the first material layer (103) is greater than or equal to 40%.

8. The power tool according to claim 7, wherein a number of the first material layers (103) is configured as one layer, and the carbon fiber outer layer (105) is a woven structure formed by multiple fiber bundles (106); or, a number of the first material layers (103) is configured as greater than or equal to two layers, the carbon fiber outer layer (105) is a woven structure formed by multiple fiber bundles (106), and remaining first material layers (103) are disposed at an inner side of the carbon fiber outer layer (105) in the radial direction of the connecting tube (10) to form a carbon fiber inner layer, the carbon fiber inner layer comprises the axial fiber bundles extending and arranged along the axial direction of the connecting tube (10), and a ratio of a total layer thickness of the axial fiber bundles to a total layer thickness of the carbon fiber inner layer is greater than or equal to 50%.

9. The power tool according to claim 8, wherein a total weight of the power tool is less than or equal to 7 kg, a wall thickness of the connecting tube (10) is 1.5 mm to 2.0 mm, and a ratio of impact energy that the connecting tube (10) can withstand to the wall thickness of the connecting tube (10) is greater than or equal to 58 J/mm.

10. The power tool according to claim 9, wherein the power tool is a grass trimmer, a total weight of the grass trimmer is less than or equal to 7 kg, the battery pack (30) is disposed at one end of the connecting tube (10) located at the gripping assembly (40), the power assembly is disposed at one end of the connecting tube (10) located at the working head assembly (20), and the wall thickness of the connecting tube (10) is 1.5 mm to 1.8 mm.

11. The power tool according to claim 8, wherein a weight of the power tool as a bare machine, namely after removing the battery pack (30), is 4.2 kg to 5.5 kg, the power tool is a pole saw (300), the pole saw (300) comprises a connecting assembly, one end of the connecting assembly is provided with the working head assembly (20), another end thereof is provided with the battery pack (30), the power assembly and the gripping assembly (40), the connecting assembly comprises a telescopic tube and a handle tube (80), the handle tube (80) is connected to the gripping assembly (40), the telescopic tube comprises an inner tube (101) and an outer tube (102), the inner tube (101) is at least partially coaxially sliding nested in the outer tube (102) and one end thereof is connected to the working head assembly (20), a locking member (90) is further disposed between the inner tube (101) and the outer tube (102) to maintain relative fixation therebetween, the outer tube (102) is disposed between the inner tube (101) and the handle tube (80), and the connecting tube (10) is configured as the outer tube (102).

12. A power tool, the power tool comprising:
a working head assembly (20), the working head assembly (20) comprising a working head (201) for operation;
a power assembly, the power assembly driving the working head (201);
a battery pack (30), the battery pack (30) supplying power to the power assembly;
a gripping assembly (40) for user gripping;
a connecting tube (10) disposed between the working head assembly (20) and the gripping assembly (40), wherein
the connecting tube (10) is at least arranged with a first material layer (103) and a second material layer (104) in a radial direction thereof, the first material layer (103) is a carbon fiber layer, and the second material layer (104) is a glass fiber layer.

13. The power tool according to claim 12, wherein a total layer thickness of the glass fiber layer accounts for 50% to 80% of a total wall thickness of the connecting tube (10).

14. The power tool according to claim 13, wherein the glass fiber layer comprises axial fiber bundles extending and arranged along an axial direction of the connecting tube (10), and a ratio of a total thickness of the axial fiber bundles in a radial direction of the connecting tube (10) to the total layer thickness of the glass fiber layer is greater than or equal to 80%.

15. The power tool according to claim 14, wherein an outermost layer of the connecting tube (10) in a radial direction thereof is a carbon fiber outer layer (105) formed by the carbon fiber layer.

16. The power tool according to claim 15, wherein a fiber arrangement direction of the carbon fiber outer layer (105) is different from a fiber arrangement direction of an adjacent material layer.

17. The power tool according to claim 15 or 16, wherein the carbon fiber layer comprises axial fiber bundles extending and arranged along the axial direction of the connecting tube (10), and a ratio of a total thickness of the axial fiber bundles of the carbon fiber layer in the radial direction of the connecting tube (10) to a total layer thickness of the carbon fiber layer is greater than or equal to 40%.

18. The power tool according to claim 17, wherein a number of the carbon fiber layers is configured as one layer, and the carbon fiber outer layer (105) is a woven structure formed by multiple fiber bundles (106); or, a number of the carbon fiber layers is configured as greater than or equal to two layers, the carbon fiber outer layer (105) is a woven structure formed by multiple fiber bundles (106), and remaining carbon fiber layers are disposed at an inner side of the carbon fiber outer layer in the radial direction of the connecting tube (10) to form a carbon fiber inner layer, the carbon fiber inner layer comprises the axial fiber bundles extending and arranged along the axial direction of the connecting tube (10), and a ratio of a total layer thickness of the axial fiber bundles to a total layer thickness of the carbon fiber inner layer is greater than or equal to 50%.

19. The power tool according to claim 18, wherein a total weight of the power tool is less than or equal to 7 kg, a wall thickness of the connecting tube (10) is 1.5 mm to 2.0 mm, and a ratio of impact energy that the connecting tube (10) can withstand to the wall thickness of the connecting tube (10) is greater than or equal to 58 J/mm.

20. The power tool according to claim 19, wherein the power tool is a grass trimmer, a total weight of the grass trimmer is less than or equal to 7 kg, the battery pack (30) is disposed at one end of the connecting tube (10) located at the gripping assembly (40), the power assembly is disposed at one end of the connecting tube (10) located at the working head assembly (20), and the wall thickness of the connecting tube (10) is 1.5 mm to 1.8 mm.

21. The power tool according to claim 18, wherein a weight of the power tool as a bare machine, namely after removing the battery pack (30), is 4.2 kg to 5.5 kg, the power tool is a pole saw (300), the pole saw (300) comprises a connecting assembly, one end of the connecting assembly is provided with the working head assembly (20), another end thereof is provided with the battery pack (30), the power assembly and the gripping assembly (40), the connecting assembly comprises a telescopic tube and a handle tube (80), the handle tube (80) is connected to the gripping assembly (40), the telescopic tube comprises an inner tube (101) and an outer tube (102), the inner tube (101) is at least partially coaxially sliding nested in the outer tube (102) and one end thereof is connected to the working head assembly (20), a locking member (90) is further disposed between the inner tube (101) and the outer tube (102) to maintain relative fixation therebetween, the outer tube (102) is disposed between the inner tube (101) and the handle tube (80), and the connecting tube (10) is configured as the outer tube (102).

22. A power tool, the power tool comprising:
a working head assembly (20), the working head assembly (20) comprising a working head (201) for operation;
a power assembly, the power assembly driving the working head (201);
a battery pack (30), the battery pack (30) supplying power to the power assembly;
a gripping assembly (40) for user gripping;
a connecting tube (10), the connecting tube (10) comprising a first connecting tube (107) connected to the working head assembly (20) and a second connecting tube (108) connected to the gripping assembly (40), wherein
the first connecting tube (107) and/or the second connecting tube (108) is at least arranged with a first material layer (103) made of carbon fiber material and a second material layer (104) made of non-carbon fiber material in a radial direction thereof, the stiffness of the second material layer (104) is smaller than the stiffness of the first material layer (103), and the toughness of the second material layer (104) is greater than the toughness of the first material layer (103).

23. The power tool according to claim 22, wherein a total layer thickness of the second material layer (104) in the first connecting tube (107) accounts for 50% to 80% of a total wall thickness of the first connecting tube (107).

24. The power tool according to claim 23, wherein the second material layer (104) of the first connecting tube (107) is a glass fiber layer.

25. The power tool according to claim 23, wherein the second material layer (104) of the first connecting tube (107) comprises axial fiber bundles extending and arranged along an axial direction of the first connecting tube (107), and a ratio of a total thickness of the axial fiber bundles in a radial direction of the first connecting tube (107) to the total layer thickness of the second material layer (104) is greater than or equal to 80%.

26. The power tool according to claim 23, wherein an outermost layer of the first connecting tube (107) in a radial direction thereof is a carbon fiber outer layer (105) formed by the first material layer (103).

27. The power tool according to claim 26, wherein a fiber arrangement direction of the carbon fiber outer layer (105) of the first connecting tube (107) is different from a fiber arrangement direction of an adjacent material layer.

28. The power tool according to claim 26 or 27, wherein the first material layer (103) of the first connecting tube (107) comprises axial fiber bundles extending and arranged along the axial direction of the first connecting tube (107), and a ratio of a total thickness of the axial fiber bundles in the radial direction of the first connecting tube (107) to a total layer thickness of the first material layer (103) is greater than or equal to 40%.

29. The power tool according to claim 28, wherein a number of the first material layers (103) of the first connecting tube (107) is configured as one layer, and the carbon fiber outer layer (105) of the first connecting tube (107) is a woven structure formed by multiple fiber bundles (106); or, a number of the first material layers (103) of the first connecting tube (107) is configured as greater than or equal to two layers, the carbon fiber outer layer (105) of the first connecting tube (107) is a woven structure formed by multiple fiber bundles (106), and remaining first material layers (103) are disposed at an inner side of the carbon fiber outer layer (105) in the radial direction of the first connecting tube (107) to form a carbon fiber inner layer, the carbon fiber inner layer of the first connecting tube (107) comprises the axial fiber bundles arranged and extending along the axial direction of the first connecting tube (107), and a ratio of a total layer thickness of the axial fiber bundles to a total layer thickness of the carbon fiber inner layer is greater than or equal to 50%.

30. The power tool according to claim 22, wherein a total layer thickness of the second material layer (104) in the second connecting tube (108) accounts for 50% to 80% of a total wall thickness of the second connecting tube (108).

31. The power tool according to claim 30, wherein the second material layer (104) of the second connecting tube (108) is a glass fiber layer.

32. The power tool according to claim 30, wherein the second material layer (104) of the second connecting tube (108) comprises axial fiber bundles extending and arranged along an axial direction of the second connecting tube (108), and a ratio of a total thickness of the axial fiber bundles in a radial direction of the second connecting tube (108) to the total layer thickness of the second material layer (104) is greater than or equal to 80%.

33. The power tool according to claim 30, wherein an outermost layer of the second connecting tube (108) in a radial direction thereof is a carbon fiber outer layer (105) formed by the carbon fiber layer.

34. The power tool according to claim 33, wherein a fiber arrangement direction of the carbon fiber outer layer (105) of the second connecting tube (108) is different from a fiber arrangement direction of an adjacent material layer.

35. The power tool according to claim 33 or 34, wherein the first material layer (103) of the second connecting tube (108) comprises axial fiber bundles extending and arranged along the axial direction of the second connecting tube (108), and a ratio of a total thickness of the axial fiber bundles in the radial direction of the second connecting tube (108) to a total layer thickness of the first material layer (103) is greater than or equal to 40%.

36. The power tool according to claim 35, wherein a number of the first material layers (103) of the second connecting tube (108) is configured as one layer, and the carbon fiber outer layer (105) is a woven structure formed by multiple fiber bundles (106); or, a number of the first material layers (103) of the second connecting tube (108) is configured as greater than or equal to two layers, the carbon fiber outer layer (105) of the second connecting tube (108) is a woven structure formed by multiple fiber bundles (106), and remaining first material layers (103) are disposed at an inner side of the carbon fiber outer layer (105) in the radial direction of the second connecting tube (108) to form a carbon fiber inner layer, the carbon fiber inner layer of the second connecting tube (108) comprises the axial fiber bundles arranged and extending along the axial direction of the second connecting tube (108), and a ratio of a total layer thickness of the axial fiber bundles to a total layer thickness of the carbon fiber inner layer is greater than or equal to 50%.

37. A power tool, the power tool comprising:
a working head assembly (20), the working head assembly (20) comprising a working head (201) for operation;
a power assembly, the power assembly driving the working head (201);
a battery pack (30), the battery pack (30) supplying power to the power assembly;
a gripping assembly (40) for user gripping;
a connecting assembly disposed between the working head assembly (20) and the gripping assembly (40);
one end of the connecting assembly is provided with the working head assembly (20), another end thereof is provided with the battery pack (30), the power assembly and the gripping assembly (40), the connecting assembly comprises a first connecting tube (107), a second connecting tube (108) and a handle tube (80), the handle tube (80) is connected to the gripping assembly (40), the first connecting tube (107) is closer to the working head assembly (20) relative to the second connecting tube (108), the second connecting tube (108) is connected to the first connecting tube (107), and the second connecting tube (108) is closer to the gripping assembly (40) relative to the first connecting tube (107), wherein
the first connecting tube (107) is at least arranged with a carbon fiber layer made of carbon fiber material in a radial direction thereof, the second connecting tube (108) is at least arranged with a carbon fiber layer made of carbon fiber material in a radial direction thereof, wherein a ratio of a total layer thickness of the carbon fiber layer in the first connecting tube (107) to a total wall thickness of the first connecting tube (107) is greater than a ratio of a total layer thickness of the carbon fiber layer in the second connecting tube (108) to a total wall thickness of the second connecting tube (108).

38. The power tool according to claim 37, wherein the first connecting tube (107) and the second connecting tube (108) form a telescopic tube, the first connecting tube (107) is configured as an inner tube (101) of the telescopic tube, the second connecting tube (108) is configured as an outer tube (102) of the telescopic tube, the inner tube (101) is at least partially coaxially sliding nested in the outer tube (102) and one end thereof is connected to the working head assembly (20), a locking member (90) is further disposed between the inner tube (101) and the outer tube (102) to maintain relative fixation therebetween, and the outer tube (102) is disposed between the inner tube (101) and the handle tube (80).

39. The power tool according to claim 38, wherein a ratio of a total layer thickness of the carbon fiber layer in the inner tube (101) to a total wall thickness of the inner tube (101) is 100%.

40. The power tool according to claim 39, wherein the inner tube (101) is arranged with at least two layers of the carbon fiber layer in a radial direction thereof, the carbon fiber layer located at an outermost layer in the radial direction of the inner tube (101) is a woven structure formed by multiple fiber bundles (106), and remaining carbon fiber layers are unidirectional structures formed by multiple fiber bundles (106).

41. The power tool according to claim 40, wherein the unidirectional structure comprises an axial structure and a circumferential structure, multiple fiber bundles (106) extend along an axial direction of the inner tube (101) to form the axial structure, multiple fiber bundles (106) extend along a circumferential direction of the inner tube (101) to form the circumferential structure, wherein a ratio of a total layer thickness of the carbon fiber layer adopting the axial structure to a total layer thickness of the carbon fiber layer adopting the circumferential structure is 3:2.

42. The power tool according to claim 38, wherein the outer tube (102) is further arranged with one layer or at least two layers of glass fiber layer made of glass fiber material in a radial direction thereof, and a total layer thickness of the glass fiber layer accounts for 50% to 80% of a total wall thickness of the outer tube (102).

43. The power tool according to claim 42, wherein the glass fiber layer of the outer tube (102) comprises axial fiber bundles extending and arranged along an axial direction of the outer tube (102), and a ratio of a total thickness of the axial fiber bundles in a radial direction of the outer tube (102) to the total layer thickness of the glass fiber layer is greater than or equal to 80%.

44. The power tool according to claim 43, wherein an outermost layer of the outer tube (102) in a radial direction thereof is a carbon fiber outer layer (105) formed by the carbon fiber layer.

45. The power tool according to claim 44, wherein a fiber arrangement direction of the carbon fiber outer layer (105) of the outer tube (102) is different from a fiber arrangement direction of an adjacent material layer.

46. The power tool according to claim 44 or 45, wherein the carbon fiber layer of the outer tube (102) comprises axial fiber bundles extending and arranged along the axial direction of the outer tube (102), and a ratio of a total thickness of the axial fiber bundles in the radial direction of the outer tube (102) to a total layer thickness of the carbon fiber layer is greater than or equal to 40%.

47. The power tool according to claim 46, wherein a number of the carbon fiber layers of the outer tube (102) is configured as one layer, and the carbon fiber outer layer (105) is a woven structure formed by multiple fiber bundles (106); or, a number of the carbon fiber layers of the outer tube (102) is configured as greater than or equal to two layers, the carbon fiber outer layer (105) of the outer tube (102) is a woven structure formed by multiple fiber bundles (106), and remaining carbon fiber layers are disposed at an inner side of the carbon fiber outer layer in the radial direction of the outer tube (102) to form a carbon fiber inner layer, the carbon fiber inner layer of the outer tube (102) comprises the axial fiber bundles extending and arranged along the axial direction of the outer tube (102), and a ratio of a total thickness of the axial fiber bundles in the radial direction of the outer tube (102) to a total layer thickness of the carbon fiber layer is greater than or equal to 60%.

48. The power tool according to claim 37, wherein the handle tube (80) is a metal tube.
